# EUROPEAN PATENT SPECIFICATION

(11) **EP 4 712 361 B1**
(45) Date of publication and mention of the grant of the patent: **04.11.2026**
(21) Application number: 24200940.5
(22) Date of filing: 17.09.2024
(51) Int. Cl.: H04B 7/08, H04B 7/24, H04B 7/185

(54) **METHODS AND APPARATUS FOR ORBIT DETERMINATION AND TIME SYNCHRONIZATION BASED ON TWO-WAY USER MEASUREMENTS**
VERFAHREN UND VORRICHTUNG ZUR ORBITBESTIMMUNG UND ZEITSYNCHRONISATION AUF DER BASIS VON ZWEIWEG-BENUTZERMESSUNGEN
PROCÉDÉS ET APPAREIL DE DÉTERMINATION D'ORBITE ET DE SYNCHRONISATION TEMPORELLE SUR LA BASE DE MESURES D'UTILISATEUR BIDIRECTIONNELLES

(43) Date of publication of application: 18.03.2026
(73) Proprietor: European Space Agency, 75738 Paris Cedex 15 (FR)
(72) Inventor: ABEL, Felix, 27318 Hilgermissen (DE); GREC, Florin-Catalin, 2511 EZ Den Haag (NL); PRIETO CERDEIRA, Roberto, 2141VJ Oegstgeest (NL)
(74) Representative: MERH-IP Matias Erny Reichl Hoffmann Patentanwälte PartG mbB

(56) References cited:
- CN-A- 107 229 061
- RU-C1- 2 702 098
- IESS LUCIANO ET AL: "High Performance Orbit Determination and Time Synchronization for Lunar Radio Navigation Systems", GNSS 2023 - PROCEEDINGS OF THE 36TH INTERNATIONAL TECHNICAL MEETING OF THE SATELLITE DIVISION OF THE INSTITUTE OF NAVIGATION (ION GNSS+ 2023), THE INSTITUTE OF NAVIGATION, 8551 RIXLEW LANE SUITE 360 MANASSAS, VA 20109, USA, 15 September 2023 (2023-09-15), pages 4029 - 4050, XP056018403

## Description

### Technical Field

This application relates to the field of orbit determination and time synchronization (ODTS) for space vehicles, in particular satellites. The application particularly relates to techniques for ODTS based on two-way satellite time and frequency transfer (TWSTFT), and to satellites or constellations of satellites implementing such techniques.

### Background

Conventional ODTS techniques are typically based on a GNSS service, such as GPS or Galileo, or require dedicated ground stations. However, it may be desirable to reduce dependency on such external services.

Thus, there is a need for improved techniques for orbit determination and/or time synchronization for satellites. There is particular need for such techniques that have improved robustness and that do not rely on GNSS.

In RU 2 702 098 C1, a technique of performing trajectory measurements and determining the parameters of the orbit of a satellite is described that can be used to accurately determine the current parameters of satellite motion. This method is based on the reception and recording or radio signals of the receiving reference benchmark stations and the ground based radio-technical stations from the satellite together with timestamps.

In less Luciano et Al. "High Performance Orbit Determination and Time Synchronization for Lunar Radio Navigation Systems", a concept for orbit determination and time synchronization of a lunar radio navigation system is presented. The proposed approach utilizes small ground antennas that simultaneously track all satellites in the constellation using K-band frequency links.

Furthermore, in CN 107 229 061 A, a low earth orbit satellite-based satellite-earth differential real-time precise positioning method is described. Thereby, a low earth orbit satellite is utilized to broadcast observation data and real-time orbit data of the satellite-borne GNSS (Global Navigation Satellite System) receiver of the low earth orbit satellite to the ground; and after receiving the differential information broadcasted by the low earth orbit satellite, a ground receiver generates a double-difference observation value consisting of the differential information and a local GNSS observation value and performs pseudorange-based moving base station DGNSS (Differential GNSS) positioning and carrier phase-based moving base station RTK (real-time kinematic) positioning.

### Summary

In view of some or all of these needs, the present disclosure proposes methods and satellites having the features of the respective independent claims.

An aspect of the disclosure relates to a method (e.g., satellite-based method). The method may be a method of exchanging messages and/or a method of ODTS (e.g., a ranging method), in particular based on two-way user measurements. The method may include, at a satellite, in each of a plurality of time periods (e.g., time intervals), communicating with a respective pair of ground stations comprising a first ground station and a second ground station, to exchange a first downlink message and a first uplink message with the first ground station and to exchange a second downlink message and a second uplink message with the second ground station. Therein, pairs of ground stations may be different from one time period to the next. Further, the first and second downlink messages and the first and second uplink messages may be time-stamped messages. That is, the first uplink message may include an indication (e.g., time stamp) of a time at which the first uplink message has been transmitted by/at the first ground station, the first downlink message may include an indication (e.g., time stamp) of a time at which the first downlink message has been transmitted by/at the satellite, the second uplink message may include an indication (e.g., time stamp) of a time at which the second uplink message has been transmitted by/at the second ground station, and/or the second downlink message may include an indication (e.g., time stamp) of a time at which the second downlink message has been transmitted by/at the satellite. The satellite may be a navigation satellite, such as a navigation satellite in Low Earth Orbit (LEO) (e.g., with a two-way payload as defined in [1]) or a Global Navigation Satellite System (GNSS) satellite in Medium Earth Orbit (MEO), for example. The method may further include determining one or more orbit parameters indicative of an orbit of the satellite based on known positions of respective first and second ground stations relating to one or more of the plurality of time periods and based on first timing information and second timing information. Therein, the first timing information may relate to times of reception and transmission of respective first uplink and downlink messages in the one or more of the plurality of time periods, and the second timing information may relate to times of reception and transmission of respective second uplink and downlink messages in the one or more of the plurality of time periods. For instance, timing information from a given number (e.g., predetermined number, or highest possible number) of previous time periods in which there had been an exchange of messages may be used for determining the one or more orbit parameters. The timing information may be derivable at least in part from time stamps of the exchanged messages.

Configured as defined above, the proposed method relies on using two-way user measurements onboard a platform, such as a satellite (e.g., navigation satellite) for OD(TS). Based thereon, OD(TS) can be performed without reliance on GNSS and without reliance on a controlled ground segment. Rather, the OD(TS) is based on collaborative (or even uncontrolled) exchanges with ground stations (e.g., "sensing UEs", anchor users) and can be computed autonomously onboard the platform. Autonomous OD(TS) computation in turn allows autonomous operation of, for example, a satellite broadcasting navigation signals, where the autonomous OD(TS) can be used as a back-up.

In some embodiments, determining the one or more orbit parameters may include determining, for each of the one or more time periods, first delay information for the first ground station based on the first timing information and determining second delay information for the second ground station based on the second timing information. The first delay information may relate to a propagation delay (e.g., one-way propagation delay (e.g., in uplink and/or downlink direction) or round-trip propagation delay) between the first ground station and the satellite. The second delay information may relate to a propagation delay (e.g., one-way propagation delay (e.g., in uplink and/or downlink direction) or round-trip propagation delay) between the second ground station and the satellite. Determining the one or more orbit parameters may further include determining, for each of the one or more time periods, first distance information for the first ground station in dependence on an estimate of the one or more orbit parameters and based on the known position of the first ground station, and second distance information for the second ground station in dependence on the one or more orbit parameters and based on the known position of the second ground station. The first distance information may relate to a (spatial) distance (e.g., one way distance (e.g., in uplink and/or downlink direction) or round-trip distance) between the first ground station and the satellite. The second distance information may relate to a (spatial) distance (e.g., one way distance (e.g., in uplink and/or downlink direction) or round-trip distance) between the second ground station and the satellite. The first and second distance information may be based on an (instantaneous) estimate of the position of the satellite, which may be obtained using the one or more orbit parameters. Positions of the first and second ground stations and a position of the satellite may be expressed in an Earth-centered and Earth-fixed, ECEF, frame, for example. Determining the one or more orbit parameters may further include determining an error function based on the first and second delay information and the first and second distance information for the one or more time periods. Determining the one or more orbit parameters may yet further include minimizing the error function by recursively adapting the estimate of the one or more orbit parameters. A final determination result for the one or more orbit parameters may be obtained as the estimate of the one or more orbit parameters once an end condition of the recursive determination is met (e.g., relating to a maximum number of iterations or to a lower limit for the error function). In the above, the first and second ground stations may be assumed to have substantially zero clock errors and substantially zero position errors.

Using this procedure, time-stamped message exchange with the first and second ground stations allows gathering sufficient information for performing meaningful OD(TS) on-bord of the satellite.

In some embodiments, the first distance information may relate to an uplink distance and a downlink distance between the respective first ground station and the satellite, or to a round-trip distance between the respective first ground station and the satellite. Further, the second distance information may relate to an uplink distance and a downlink distance between the respective second ground station and the satellite, or to a round-trip distance between the respective second ground station and the satellite.

Additionally or alternatively, the first delay information may relate to an uplink delay and a downlink delay between the respective first ground station and the satellite, or to a round-trip delay between the respective first ground station and the satellite. Further, the second delay information may relate to an uplink delay and a downlink delay between the respective second ground station and the satellite, or to a round-trip delay between the respective second ground station and the satellite.

In some embodiments, the first distance information may be further based on a time of reception of the first uplink message at the satellite and a time of transmission of the first downlink message at the satellite. The second distance information may be further based on a time of reception of the second uplink message at the satellite and a time of transmission of the second downlink message at the satellite.

In some embodiments, the method may further include determining one or more clock parameters of a satellite clock of the satellite based on the known positions of respective first and second ground stations relating to the one or more of the plurality of time periods and based on the first timing information and the second timing information in the one or more of the plurality of time periods.

With this, the proposed method allows for joint orbit determination and clock synchronization.

In some embodiments, the first delay information and the second delay information may depend on an estimate of the one or more clock parameters. The first distance information and the second distance information may further depend on the estimate of the one or more clock parameters, for example via time-dependence of an estimated position of the satellite. Then, the error function may be minimized by recursively and jointly adapting the estimate of the one or more orbit parameters and the estimate of the one or more clock parameters. A final determination result for the one or more clock parameters may be obtained as the estimate of the one or more clock parameters once an end condition of the recursive determination is met (e.g., relating to a maximum number of iterations or to a lower limit for the error function).

In some embodiments, the error function may be minimized using least-squares-minimization. In particular, the error function may be minimized using constrained least-squares-minimization.

Using in particular constrained least-squares-minimization allows to significantly decrease convergence time and thereby enables real-time OD(TS).

In some embodiments, the one or more clock parameters may include parameters of an affine clock model. Additionally or alternatively, the one or more clock parameters may include a clock offset in relation to absolute time and, optionally, a clock skew in relation to absolute time.

In some embodiments, the one or more orbit parameters may include at least one of an eccentricity of the orbit, a semi-major axis, an inclination, a right ascension of the ascending node, an argument of the perigee, and a mean anomaly. That is, the one or more orbit parameters may be parameters of a Keplerian orbit. For example, the one or more orbit parameters may comprise all of the aforementioned parameters of a Keplerian orbit. Alternatively, the one or more orbit parameters may include at least one of components of a position vector of the satellite and components of a velocity vector of the satellite. In this case, the components of the position vector and the velocity vector may be expressed in the ECEF or ECI frame, for example.

In some embodiments, a sequence of exchanged messages in each time period may be given by: first uplink message, second downlink message, second uplink message, and first downlink message.

In some embodiments, each of the first and second uplink messages and the first and second downlink messages may include an identifier of a transmitter of the respective message. Additionally or alternatively, the second uplink message may include an indication of a time of reception of the second downlink message at the second ground station.

In some embodiments, the method may further include, at the satellite, in each of the plurality of time periods, receiving a third uplink message from the first ground station. Optionally, the method may further include transmitting one or more third downlink messages for reception by the first and second ground stations. The one or more third downlink messages may allow the first and second ground stations to compute their residual clock synchronization.

In some embodiments, the third uplink message may include an indication of a time of reception of the first downlink message at the first ground station. Additionally or alternatively, each of the one or more third downlink messages may include indications of times of reception of the first and second uplink messages at the satellite, of times of transmission of the first and second downlink messages at the satellite, and/or of the one or more orbit parameters, and optionally, the second uplink message and the third uplink message.

In some embodiments, the method may further include, at the satellite, exchanging signaling with a second satellite via an inter satellite link, to provide at least one of: intersatellite ranging; intersatellite time transfer; information on the orbit parameters of the first satellite, second satellite, and/or a third satellite different from the first and second satellites; information on clock parameters of the first satellite, second satellite, and/or third satellite; timing information in relation to the first and/or second satellite; information on positions of the first and/or second ground stations; information on the status or confidence of the determination of the one or more orbit parameters of the first satellite; information for jointly solving an OD or ODTS estimation problem of the first satellite, second satellite, and/or third satellite; and/or information for jointly solving an OD or ODTS estimation problem of the first satellite, second satellite, and/or third satellite by means of a distributed consensus algorithm.

In some embodiments, the first and second ground stations may be anchor users (or sensing user elements (SUEs), user stations, collaborative two-way users, two-way user stations). Also, the first and second ground stations may be assumed to have local times substantially identical to absolute time. One example of such anchor user may be a Coordinated Universal Time (UTC) timing lab.

Another aspect of the disclosure relates to a satellite. The satellite may include a transmitter and receiver unit (e.g., transceiver unit) for, in each of a plurality of time periods, communicating with a respective pair of ground stations comprising a first ground station and a second ground station, to exchange a first downlink message and a first uplink message with the first ground station and to exchange a second downlink message and a second uplink message with the second ground station. The first and second downlink messages and the first and second uplink messages may be time-stamped messages. The satellite may further include a processing unit (e.g., computer controller, CPU, etc.) for determining one or more orbit parameters indicative of an orbit of the satellite based on known positions of respective first and second ground stations relating to one or more of the plurality of time periods and based on first timing information relating to times of reception and transmission of respective first uplink and downlink messages and second timing information relating to times of reception and transmission of respective second uplink and downlink messages in the one or more of the plurality of time periods.

It will be appreciated that apparatus features and method steps may be interchanged in many ways. In particular, the details of the disclosed apparatus or system (e.g., satellite or constellation of satellites) can be realized by the corresponding method of operating the apparatus/system or parts thereof, and vice versa, as the skilled person will appreciate. Moreover, any of the above statements made with respect to the apparatus/system are understood to likewise apply to the corresponding method, and vice versa.

### Brief Description of the Figures

Example embodiments of the disclosure are explained below with reference to the accompanying drawings, wherein
**Fig. 1** schematically illustrates an example of an overall framework for employing methods according to embodiments of the disclosure,
**Fig. 2** schematically illustrates an example of signal exchange between a satellite and ground stations according to embodiments of the disclosure;
**Fig. 3** is a flowchart illustrating an example of a method according to embodiments of the disclosure;
**Fig. 4** schematically illustrates an example of a timing diagram for the signal exchange of **Fig. 2** according to embodiments of the disclosure;
**Fig. 5** is a flowchart illustrating an example of a method according to embodiments of the disclosure that may be performed as an addition to the method of **Fig. 3****;**
**Fig. 6** is a flowchart illustrating an example of a method according to embodiments of the disclosure for implementing a step in the method of **Fig. 3****;**
**Fig. 7** is a map illustrating an example of UTC labs across Europe;
**Fig. 8** schematically illustrates an example of a simulation flow chart for embodiments of the disclosure;
**Fig. 9** is a diagram illustrating an example of a first visibility window according to embodiments of the disclosure;
**Fig. 10** is a diagram illustrating an example of an estimation error of a clock skew correction parameter according to embodiments of the disclosure;
**Fig. 11** is a diagram illustrating an example of an estimation error of a clock skew correction parameter according to embodiments of the disclosure; and
**Fig. 12** is a diagram illustrating an example of an estimation error of a three-dimensional position according to embodiments of the disclosure.

### Detailed Description

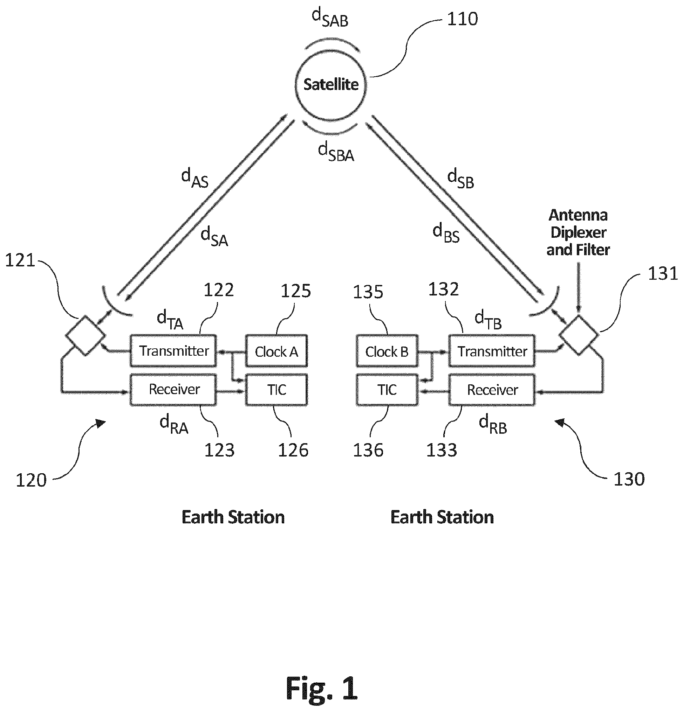

Two-Way Satellite Time and Frequency Transfer (TWSTFT) in a half-duplex configuration relies on signals traveling in both directions between two synchronized clocks or oscillators. A schematic representation of an example of a TWSTFT procedure is shown in **Fig. 1****.** A satellite (or satellite vehicle, SV) 110 exchanges messages (e.g., radio-signal-based messages) d_{AS} and d_{SA} with Earth station A 120 and exchanges messages d_{SB} and d_{BS} with Earth station B 130. Each Earth station 120, 130 has an antenna 121, 131, a transmitter 122, 132, a receiver 123, 133, a clock 125, 135, and TIC 126, 136. The procedure may estimate the one-way delay as half of the measured round-trip delay, allowing for the correction of time discrepancies. Systems like NIST Automated Computer Time Service (ACTS) and Internet time transfers using Network Time Protocol (NTP) employ this half-duplex technique to ensure accurate time synchronization (see [3]).

The present disclosure is based on the realization of opportunities that TWSTFT can offer to the satellite, further to and beyond providing mere time synchronization between users (e.g., Earth stations). To this end, the present disclosure suggests for the users on ground to transmit their measurements to the satellite, which then can use these measurements as ranging measurements for autonomous on-board OD and/or ODTS.

While conventional TWSTFT is commonly performed using geostationary satellites, it is to be noted that also upcoming Non-GSO satellites with two-way capabilities, for example LEO-PNT satellites (see, e.g., [1] and [2]) may offer a TWSTFT service, and that the present disclosure may be applied to such satellites.

Compared to conventional ODTS (see, e.g., [4]), the ODTS proposed by this disclosure is unique for several reasons, namely:
- ODTS is computed on-board, not on ground.
- ODTS relies on anchor users or sensing user elements (SUEs, e.g., timing labs), to whom the satellite provides a service at the same time as gathering the measurements for ODTS.
- Measurements on ground are not taken by a ground segment that is part of the system, but rather by uncontrolled SUEs. By providing the two-way service for time synchronization to these users, the satellite may incentivize their participation.
- For each set of measurements gathered, at least two SUEs should be in view.

In accordance with the above, the present disclosure proposes methods and apparatus for OD and/or ODTS based on user measurements in a two-way satellite navigation system. A satellite system (e.g., satellite navigation system) proposed by the present disclosure is capable of two-way ranging and navigation that employs user information for on-board OD(TS) based on two-way ranging.

Thereby, the proposed techniques leverage a two-way link with a SUE to compute data products autonomously onboard, leading to autonomous, robust, and resilient operation, as well as to a lean and cheaper ground segment.

Advantageously, techniques according to the present disclosure may be employed in the context of LEO-PNT (see, e.g., [1] and [2]), i.e., Position, Navigation and Timing to be delivered from LEO.

While reference throughout the disclosure is frequently made to Earth stations, ground stations, and SUEs, it is understood that the present disclosure is not so limited and likewise applies to other users that can exchange signals with the satellite. In general, these users could be referred to as (possibly interchangeably) anchor users, user stations, ground stations, collaborating two-way users, or two-way user stations. Main characteristics of these users include that they are not under common control with the satellite(s) and the ground segment that controls and manages the satellite(s). Moreover, the users may benefit from the service offered by satellite or satellite constellation (either directly through this two-way exchange or through a separate GNSS-like broadcast signal). Moreover, the users are understood to have a known, static position (e.g., on Earth's surface) and to have a good internal clock. For instance, the users may be National Timing Laboratories contributing to the UTC time. Optionally, the entity controlling the user may have interest in correct operation of the satellites, therefore the satellites can have a degree of trust in the users.

In this sense, techniques according to the present disclosure may be said to relate to autonomous orbit and/or time estimation onboard a satellite based on information from an uncontrolled information source that are at the same time users of the system and thus are interested in correct operation thereof.

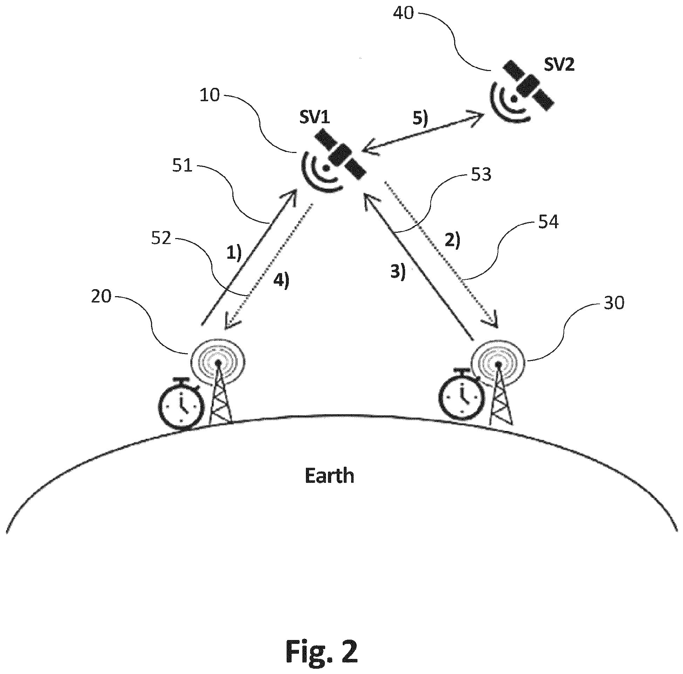

**Fig. 2** shows an example of a setup for implementing techniques according to the present disclosure. The setup comprises one or more satellites (or SVs) 10, 40, for example a single satellite, a set of satellites of a constellation of satellites, or a constellation of satellites. The setup further comprises a set of SUEs 20, 30 capable of two-way ranging and having knowledge of absolute time and/or position.

In this setup, OD(TS) (e.g., back-up OD(TS)) can be performed based on measurements taken when a satellite serves as overlay for TWSTFT, which is currently used, for example, for synchronizing national timing labs with one-another via geostationary satellites (see, e.g., [3]). The present disclosure proposes to exploit such measurements for onboard OD(TS) of satellites (e.g., in non-GEO orbits).

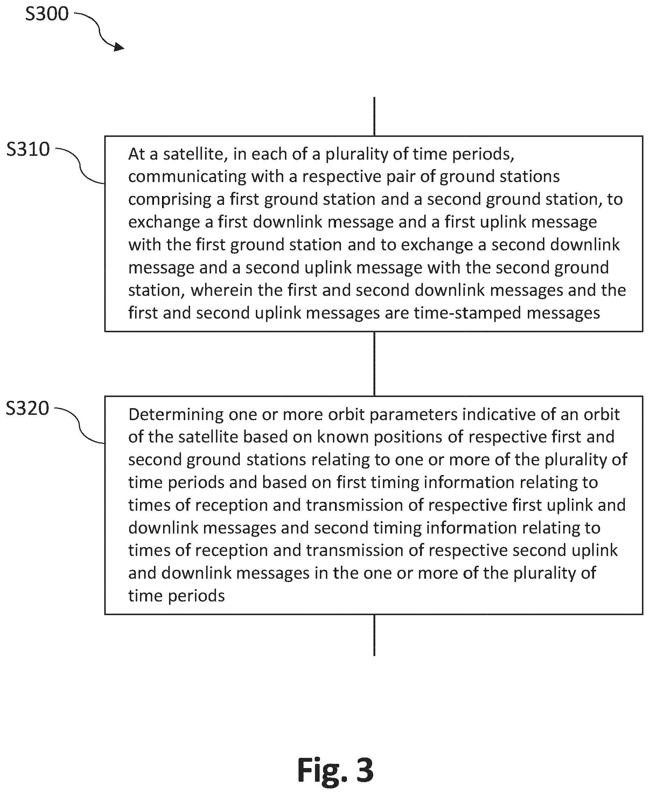

**Fig. 3** is a flowchart showing an example of a method 300 according to embodiments of the disclosure that may be implemented, for example, in a setup as shown in **Fig. 2****.** Method 300 may be a satellite-based method. Further, method 300 may be a method of exchanging messages and/or a method of OD(TS) (i.e., a ranging method), in particular based on two-way user measurements.

Method 300 comprises steps S310 and S320. Of these, at least step S310 is performed at a satellite (e.g., satellite 10 in **Fig. 2****).** Preferably, also step S320 is performed at the satellite. Further, as will be explained in more detail below, step S310 is successively or sequentially performed in each of a plurality of time periods. Information gathered at these steps S310 may then be used at a corresponding step S320, information from multiple steps S310 may be aggregated to be used by a step S320, or aggregated information from multiple previous steps may be used at each of a plurality of steps S320, each following a respective step S310. It is understood that the pairs of ground stations referred to in step S310 may be different from one time period to the next, or that at least the (un-ordered) pair of ground stations may be different from one time period to the next.

At step S310, at the satellite (e.g., satellite 10), in each of a plurality of time periods, communication is performed with a respective pair of ground stations comprising a first ground station (e.g., ground station 20) and a second ground station (e.g., ground station 30), to exchange a first downlink message and a first uplink message with the first ground station and to exchange a second downlink message and a second uplink message with the second ground station. Therein, the first and second downlink messages and the first and second uplink messages may be time-stamped messages.

Here, "time-stamped" means for example that the first uplink message may include an indication (e.g., time stamp) of a time at which the first uplink message has been transmitted by/at the first ground station, the first downlink message may include an indication (e.g., time stamp) of a time at which the first downlink message has been transmitted by/at the satellite, the second uplink message may include an indication (e.g., time stamp) of a time at which the second uplink message has been transmitted by/at the second ground station, and/or the second downlink message may include an indication (e.g., time stamp) of a time at which the second downlink message has been transmitted by/at the satellite.

In the above, the ground stations may be so-called anchor users, as described above. In any case, the first and second ground stations may be assumed to have local times substantially identical to absolute time. Further, they may be assumed to have known positions with substantially zero position errors.

At step S320, one or more orbit parameters indicative of an orbit of the satellite are determined based on known positions of respective first and second ground stations relating to one or more of the plurality of time periods and based on first timing information relating to times of reception and transmission of respective first uplink and downlink messages and second timing information relating to times of reception and transmission of respective second uplink and downlink messages in the one or more of the plurality of time periods. Therein, the timing information may be derivable at least in part from time stamps of the exchanged messages.

In some embodiments, step S320 may further include determining one or more clock parameters of a satellite clock of the satellite based on the known positions of respective first and second ground stations relating to the one or more of the plurality of time periods and based on the first timing information and the second timing information in the one or more of the plurality of time periods.

As noted above, timing information (e.g., aggregated timing information) from a given number (e.g., predetermined number, or highest possible number) of previous time periods in which there had been an exchange of messages may be used for determining the one or more orbit parameters.

### Message Exchange Procedure

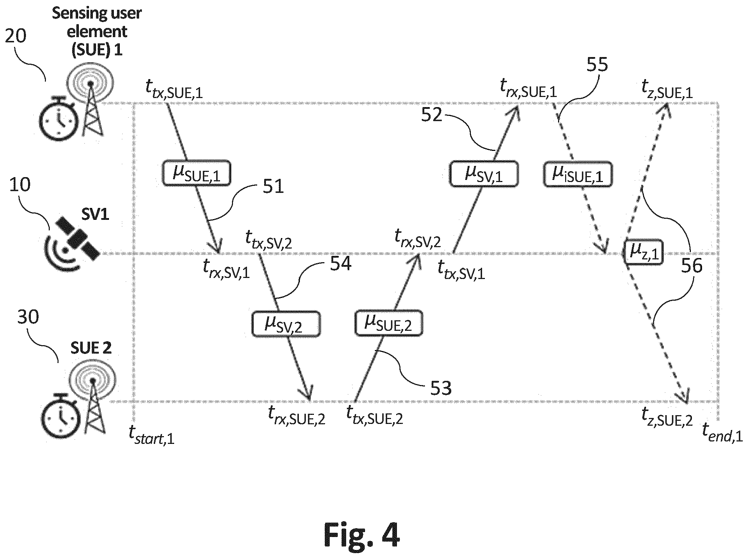

Next, an example of a message exchange procedure for implementing step S310 will be explained with reference to **Fig. 4****.** Message exchange (for example enabling also determining or validating the user element's position) in a given time interval or time period may be carried out as follows:
1) A first ground station 20 (or first SUE, anchor user, etc.) transmits a first uplink signal 51 (e.g., first uplink message in step S310) at a recorded time. The first uplink signal 51 is received by at least one satellite 10. The satellite 10 senses the time of arrival of the first uplink signal 51.
2) The at least one satellite 10 transmits a first downlink signal 54 (e.g., second downlink message in step S310) at a recorded time. The first downlink signal 54 is received by a second ground station 30 (or second SUE, anchor user, etc.). The second ground station 30 senses the time of arrival of the first downlink signal 54.
3) The second ground station 30 transmits a second uplink signal 53 (e.g., second uplink message in step S310) at a recorded time. The second uplink signal 53 is received by the at least one satellite 10. The satellite 10 senses the time of arrival of the second uplink signal 53.
4) The at least one satellite 10 transmits a second downlink signal 52 (e.g., first downlink message in step S310) at a recorded time. The second downlink signal 52 is received by the first ground station 20. The first ground station 20 senses the time of arrival of the second downlink signal 52.
5) Optionally, the at least one satellite 10 performs further information exchange and/or ranging via inter-satellite link (ISL) with at least one other satellite 40 in the constellation of satellites.

When adopting the above message exchange procedure, the sequence of exchanged messages in each time period, using the nomenclature of step S310 in method 300, would be given by first uplink message → second downlink message → second uplink message → first downlink message.

To avoid confusion, it is noted that while expressions "message" and "signal" may generally be seen as synonyms in the context of the present disclosure, but that that the labels first/second for "messages" indicate the specific SUE that is involved in the exchange, while the labels first/second for "signals" indicate the signals' position in the sequence of exchanged signals (e.g., first uplink signal → first downlink signal → second uplink signal → second downlink signal in the example of **Fig. 4****).** Depending on context, either nomenclature may be used throughout the disclosure.

In accordance with step 5) of the above message exchange procedure, method 300 may further comprise a step (not shown in **Fig. 3****)** of, at the satellite, exchanging signaling with a second satellite via an inter satellite link. This may be done to provide at least one of: intersatellite ranging, intersatellite time transfer, information on the orbit parameters of the first satellite, second satellite, and/or a third satellite different from the first and second satellites, information on clock parameters of the first satellite, second satellite, and/or third satellite, timing information in relation to the first and/or second satellite, information on positions of the first and/or second ground stations, information on the status or confidence of the determination of the one or more orbit parameters of the first satellite, information for jointly solving an OD or ODTS estimation problem of the first satellite, second satellite, and/or third satellite, and/or information for jointly solving an OD or ODTS estimation problem of the first satellite, second satellite, and/or third satellite by means of a distributed consensus algorithm.

Further details of the message exchange procedure between the satellite 10 and the ground stations 20, 30 (or SUEs, anchor users, etc.) will now be explained with reference to **Fig. 4****,** which shows an example of a temporal order of message exchange.

In each time interval (time period) *s*, two SUEs 20, 30 pairwise exchange timestamped messages via the satellite 10.

An interval s is characterized by its start and end times *t_{start,s}, t_{end,s}* (noting that *s* = 1 in the example of **Fig. 4****)** during which the SUEs (ground stations, anchor users, etc.) must be in view of the satellite. For *S* intervals, the start and end times may be defined as ${t}_{start} = \left[\begin{matrix}{{t}_{start , 1}}_{¯} \\ {{t}_{start , 2}}_{¯} \\ ⋮ \\ \overline{{t}_{start , S}}\end{matrix}\right] , {t}_{end} = \left[\begin{matrix}{{t}_{end , 1}}_{¯} \\ {{t}_{end , 2}}_{¯} \\ ⋮ \\ \overline{{t}_{end , S}}\end{matrix}\right] , ∈ {ℝ}^{S \times 1} .$ (1)

Timestamps between the M = 2S SUEs and the satellite may be exchanged as follows: ${t}_{tx , SUE} = \left[\begin{matrix}{t}_{tx , SUE , 1} \\ {{t}_{tx , SUE , 2}}_{¯} \\ {t}_{tx , SUE , 3} \\ {{t}_{tx , SUE , 4}}_{¯} \\ ⋮ \\ {t}_{tx , SUE , M}\end{matrix}\right] , {t}_{rx , SUE} = \left[\begin{matrix}{t}_{rx , SUE , 1} \\ {{t}_{rx , SUE , 2}}_{¯} \\ {t}_{rx , SUE , 3} \\ {{t}_{rx , SUE , 4}}_{¯} \\ ⋮ \\ {t}_{rx , SUE , M}\end{matrix}\right] , {t}_{tx , SV} = \left[\begin{matrix}{t}_{tx , SV , 1} \\ {{t}_{tx , SV , 2}}_{¯} \\ {t}_{tx , SV , 3} \\ {{t}_{tx , SV , 4}}_{¯} \\ ⋮ \\ {t}_{tx , SV , M}\end{matrix}\right] , {t}_{rx , SV} = \left[\begin{matrix}{t}_{rx , SV , 1} \\ {{t}_{rx , SV , 2}}_{¯} \\ {t}_{rx , S V , 3} \\ {{t}_{rx , SV , 4}}_{¯} \\ ⋮ \\ {t}_{rx , SV , M}\end{matrix}\right] , ∈ {ℝ}^{M \times 1} ,$ (2) where *t*_{*tx*,SUE,*m*} and *t*_{*rx*,SUE,*m*} correspond to the transmission time and reception time respectively, measured at the m-th SUE. *t*_{*tx*,SV,*m*} and *t*_{*rx*,SV,*m*} correspond to the transmission time and reception time respectively, measured at the satellite to/from the *m*-th SUE. Notably, the indices *m* = {2*s* - 1, 2*s*} correspond to interval *s*.

In the above, it is understood that the involved SUEs are different between time intervals (or from one time interval to the next), or that at least the (unordered) pairs of SUEs involved are different between time intervals (or from one time interval to the next). Moreover, in some cases the *M* = 2*S* accessed SUEs may include double counts of individual SUEs, for example if a given SUE is included in more than one pair of SUEs, as long as the (unordered) pairs are different from each other, as described above.

Notwithstanding the above, it is understood that SUEs or pairs of SUEs may be accessed again after one full orbit of the satellite.

Moreover, in general it is advantageous if there are a sufficient number of different pairs of SUEs is involved in the determination. However, in some implementations this may not be strictly necessary, since with the geometry changing over time, even the repeated exchange with the same pair of SUEs in the same order may be sufficient. For instance, taking an example of a satellite pass where two SUEs are favorably located 'under' the trajectory of the satellite and have sufficient distance between them, in a noise-free scenario with perfect ground station clocks, S = 3 exchanges with only these two ground SUEs should be sufficient for OD, with more exchange required for ODTS.

An example of pseudocode for message exchange between the Earth stations (ground stations, SUEs, anchor users, etc.) and the satellite in line with the above is given below by ALGORITHM 1, noting that at least steps 13 and 14 may be optional.

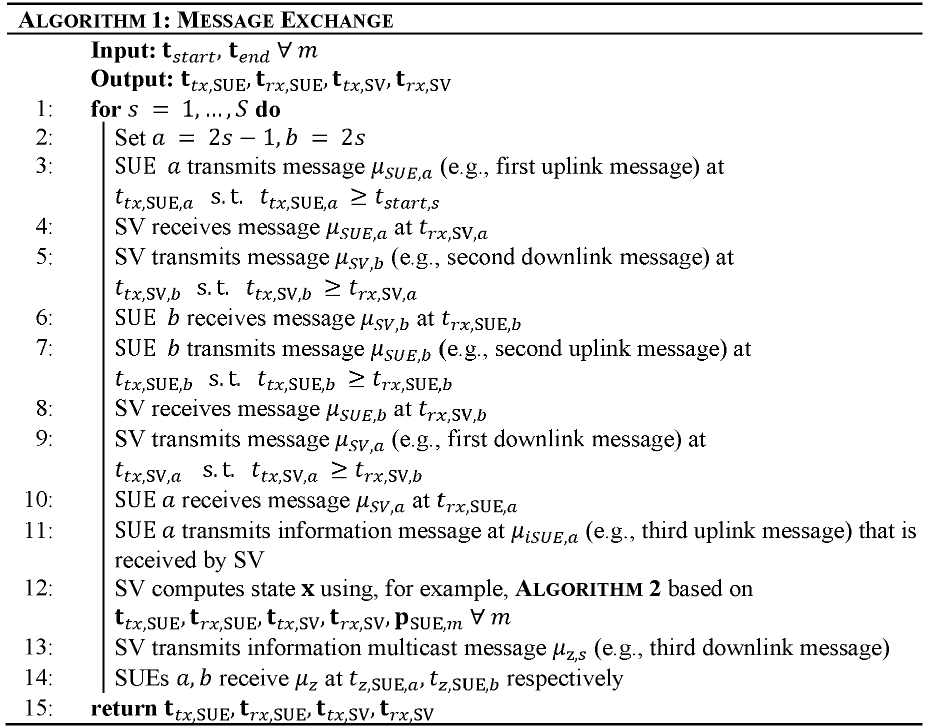

In the above, information relating to times of reception and transmission of the first uplink and downlink messages (i.e., messages exchanged between the first ground station (e.g., SUE a) and the satellite) may be referred to as first timing information. Likewise, information relating to times of reception and transmission of the second uplink and downlink messages (i.e., messages exchanged between the second ground station (e.g., SUE b) and the satellite) may be referred to as second timing information. The first and second timing information may be used for purposes of OD or ODTS (e.g., determining the one or more orbit parameters and/or one or more clock parameters), for example at step S320 of method 300.

As can be seen in **Fig. 4****,** the message exchange procedure may include exchange of additional messages beyond the aforementioned messages, for allowing the first and second ground stations (e.g., SUE a, SUE b) to compute their residual clock synchronization.

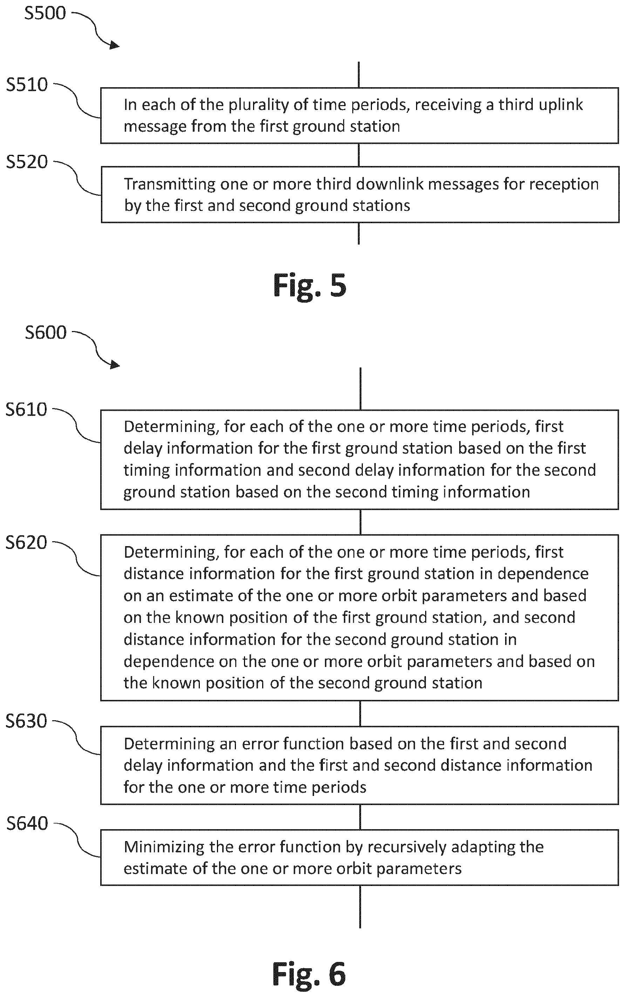

An example thereof is illustrated in the flowchart of **Fig. 5****,** which shows a method 500 with additional steps S510 and S520 that may be performed in the context of method 300.

At step S510, a third uplink message (e.g., *µ*_{*iSUE,*1} in **Fig. 4****)** is received at the satellite from the first ground station. This step may be performed in each of the plurality of time periods, for respective first ground stations.

At step S520, one or more third downlink messages (e.g., *µ*_{z,1} in **Fig. 4****)** are transmitted (e.g., by multicast transmission) by the satellite for reception by the first and second ground stations.

Returning to **Fig. 4****,** timely completion of the procedure is subject to the constraint that ${t}_{z , SUE , 2 s - 1} \leq {t}_{end , s} ∧ {t}_{z , SUE , 2 s} \leq {t}_{end , s} ∀ s .$ (3)

All messages *µ* may contain at least an identifier such that the recipient can identify the transmitter and the message. Furthermore, the following message content may be included in the exchanged messages (e.g., second uplink message, third uplink message, and third downlink message): ${μ}_{SUE , b} = \left\{b, {t}_{rx , SUE , b}, {t}_{tx , SUE , b}, {p}_{SUE , b}\right\} ,$ (4) ${t}_{z , SUE , m} \leq {t}_{int - end} ∀ m ,$ (5) ${μ}_{iSUE , a} = \left\{a, {t}_{tx , SUE , a}, {t}_{rx , SUE , a}, {p}_{SUE , a}\right\} ,$ (6) ${μ}_{z , s} = \left\{k, x, {t}_{rx , SV , a}, {t}_{tx , SV , a}, {t}_{rx , SV , b}, {t}_{tx , SV , b}, {μ}_{SUE , b}, {μ}_{iSUE , a}\right\} ,$ (7) where **p**_{SUE,*m*} denotes the position of the SUE *m* and *k* identifies the satellite involved.

In general, each of the first and second uplink messages and the first and second downlink messages exchanged at step S310 of method 300 may comprise an identifier (e.g., identifiers *a*, *b*, and *k* in the above) of a transmitter of the respective message. Further, at least the second uplink message may comprise an indication of a time of reception of the second downlink message at the second ground station.

Further, the aforementioned third uplink message may comprise an indication of a time of reception of the first downlink message at the first ground station. Each of the aforementioned one or more third downlink messages may comprise indications of times of reception of the first and second uplink messages at the satellite, of times of transmission of the first and second downlink messages at the satellite, and of the one or more orbit parameters, and optionally the second uplink message and the third uplink message. As noted above, the one or more third downlink messages may allow the first and second ground stations to compute their residual clock synchronization.

Messages *µ_{SUE,b}, µ_{iSUE,a}* are required for the satellite to calculate its state vector **x** and message *µ_{z}* allows the SUEs to calculate the clock offset relative to each other and the satellite.

In the above, the transmit times (e.g., in **Fig. 4** and ALGORITHM 1) should be chosen such that a transmission occurs after the previous reception as shown in the constraints. Additionally, it is advisable to keep the overlay Δ*t* at the respective SUE or satellite as short as possible to ensure staying within the duration of the interval *S* and to reduce the effect of the clock drift *ϕ̇* when performing a clock offset invariant orbit determination (see Eq. (37)).

### ODTS Data Model

Next, an example of the data model for OD or ODTS estimation will be defined.

Notably, the data model presented here is only based on time measurements. However, additional direct frequency measurements could reduce the number of required measurements and/or add independent observations (cf. [9] and [10] for pairwise ranging and time synchronization). It is thus understood that the present disclosure is not limited to only obtaining time measurements, but that depending on implementations, also additional input from frequency measurements may be used.

### Clock Model

Next, an example of a clock model for modelling the internal clocks of the satellite and/or the SUEs will be described.

The local time *tᵢ* measured at a node *i* (e.g., SUE or satellite) is subject to a clock error with respect to the absolute time *t̃*. For an affine clock model, the true time at a node i is subject to clock offset and skew following (for example as defined in [5]) as ${t}_{i} = {\dot{ϕ}}_{i} {t}^{˜} + {ϕ}_{i} ⇔ {C}_{i} \left({t}_{i}\right) ≜ {t}^{˜} = {α}_{i} {t}_{i} + {β}_{i} ,$ (8) where the correction parameters are uniquely related to the clock parameters as $\left[{α}_{i}, {β}_{i}\right] ≜ \left[{\dot{ϕ}}_{i}^{- 1}, -{ϕ}_{i}{\dot{ϕ}}_{i}^{- 1}\right]$ and 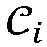 (*tᵢ*) expresses the true time *t̃* as function of local time *tᵢ* (cf. [6]). Thus, the one or more clock parameters optionally determined at step S320 of method 300 may comprise parameters of an affine clock model. Specifically, these one or more clock parameters may comprise a clock offset *ϕ* in relation to absolute time *t̃* and, optionally, a clock skew *ϕ̇* in relation to absolute time *t̃*.

Depending on circumstances, also higher-order clock models may be used to describe the SUE and satellite clocks, accounting for the fact that the clock offset and skew may be subject to change over time. Nevertheless, affine clock models are commonly assumed when modelling real-world clocks (cf. [5], [7]), and it will be assumed for the remainder of the disclosure, without intended limitation, that the clock offset and skew are constant over time. Any derivations made in the remainder of the disclosure may be extended to higher-order clock models by extending the order of 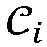 (*tᵢ*) at the expense of increasing the number of parameters to be estimated, as the skilled person will appreciate.

### Ranging Model

The exchange times **t**_{*tx*,SUE}, **t**_{*rx*,SUE}, **t**_{*tx*,SV}, **t**_{*rx*,SV} obtained based on the message exchange procedure shown in the examples of **Fig. 2** and **Fig. 4** and detailed in the example of ALGORITHM 1 (or the first and second timing information in general) may be used to derive a ranging model. For this, the delay on the uplink (SUE to satellite) and downlink (satellite to SUE), respectively, may be defined for the m-th SUE as ${τ}_{up , m} = {{t}^{˜}}_{rx , SV , m} - {{t}^{˜}}_{tx , SUE , m} = {C}_{SV} \left({t}_{rx , SV , m}\right) - {C}_{SUE , m} \left({t}_{tx , SUE , m}\right) ,$ (9) ${τ}_{down , m} = {{t}^{˜}}_{rx , SUE , m} - {{t}^{˜}}_{tx , SV , m} = {C}_{SUE , m} \left({t}_{rx , SUE , m}\right) - {C}_{SV} \left({t}_{tx , SV , m}\right) .$ (10)

The above definitions can be expressed in the true times *t̃ᵢ* or the local times *tᵢ*. As the measurements recorded at the nodes may suffer from clock errors, the notation in terms of local times may be more useful.

Next, the round-trip-time (RTT) delay between the satellite and the m-th SUE may be defined as ${τ}_{RTT , m} = \frac{{C}_{SV} \left({t}_{rx , SV , m}\right) - {C}_{SUE , m} \left({t}_{rx , SUE , m}\right) + {C}_{SUE , m} \left({t}_{rx , SUE , m}\right) - {C}_{SV} \left({t}_{tx , SV , m}\right)}{2} .$ (11)

Notably, the offset correction parameter *βᵢ* cancels out for satellite and SUE, ${τ}_{RTT , m} = \frac{{α}_{SV} \left({t}_{rx , SV , m}-{t}_{tx , SV , m}\right) + {α}_{SUE , m} \left({t}_{rx , SUE , m}-{t}_{tx , SUE , m}\right)}{2} ,$ (12) leaving only the skew correction *αᵢ*. For small times between transmission and reception, the effect of the clock skew error can be neglected, assuming *α*_{SV}, *α*_{SUE,*m*} ≈ 1. This assumption may also be used below for determining the cost function (cf. Eq. (37)) for clock offset invariant orbit determination.

For uplink, downlink, and RTT delays, a vectorial notation may be defined as follows, ${τ}_{up} = {\left[{τ}_{up , 1},{τ}_{up , 2},…,{τ}_{up , M}\right]}^{T} ∈ {ℝ}^{M \times 1} ,$ (13) ${τ}_{down} = {\left[{τ}_{down , 1},{τ}_{down , 2},…,{τ}_{down , M}\right]}^{T} ∈ {ℝ}^{M \times 1} ,$ (14) ${τ}_{RTT} = {\left[{τ}_{RTT , 1},{τ}_{RTT , 2},…,{τ}_{RTT , M}\right]}^{T} = \frac{1}{2} \left({τ}_{up}+{τ}_{down}\right) ∈ {ℝ}^{M \times 1} .$ (15)

Throughout the disclosure, information relating to the delay times (e.g., uplink delay, downlink delay, and/or RTT delay) for the first ground station (e.g., SUE a) may be referred to as first delay information, and information relating to the delay times (e.g., uplink delay, downlink delay, and/or RTT delay) for the second ground station (e.g., SUE b) may be referred to as second delay information. The first and second delay information may be used for purposes of OD(TS) (e.g., determining the one or more orbit parameters and/or one or more clock parameters), for example in step S320 of method 300. Details of the determination will be described in the following.

The distances between the nodes (e.g., respective SUEs and the satellite) at uplink and downlink can be expressed in terms of their positions, for example in the Earth-Centred and Earth-Fixed (ECEF) frame, as ${d}_{up , m} = \left‖{p}_{SV}\left({{t}^{˜}}_{rx , SV , m}\right)-{p}_{SUE , m}\right‖ = \left‖{p}_{SV}\left({C}_{SV}\left({t}_{rx , SV , m}\right)\right)-{p}_{SUE , m}\right‖ ,$ (16) ${d}_{down , m} = \left‖{p}_{SUE , m}-{p}_{SV}\left({{t}^{˜}}_{tx , SV , m}\right)\right‖ = \left‖{p}_{SUE , m}-{p}_{SV}\left({C}_{SV}\left({t}_{tx , SV , m}\right)\right)\right‖ ,$ (17) where **p**_{SV}(·) denotes the position of the satellite at a true time as defined in Eq. (24) and **p**_{SUE,*m*} denotes the position of the SUE. The time-invariant notation of the SUE implicitly assumes that the SUEs are stationary, which holds true for a preferred embodiment of this disclosure where SUEs for ODTS estimation would be UTC timing labs, or in general, nodes with internal clocks that can be approximated as having zero clock errors. The vectorial notation for these above distances may be given for example by ${d}_{up} = {\left[{d}_{up , 1},{d}_{up , 2},…,{d}_{up , M}\right]}^{T} ∈ {ℝ}^{M \times 1} ,$ (18) ${d}_{down} = {\left[{d}_{down , 1},{d}_{down , 2},…,{d}_{down , M}\right]}^{T} ∈ {ℝ}^{M \times 1} .$ (19)

Similar to the time domain formulation, the RTT distance can be expressed as ${d}_{RTT} = \frac{1}{2} \left({d}_{up}+{d}_{down}\right) .$ (20)

Information relating to distances (e.g., uplink distance, downlink distance, and/or RTT distance) for the first ground station (e.g., SUE a) may be referred to as first distance information, and information relating to distances (e.g., uplink distance, downlink distance, and/or RTT distance) for the second ground station (e.g., SUE b) may be referred to as second distance information.

The first and second distance information (e.g., for one or more time periods) may be used together with the aforementioned first and second delay information for purposes of OD(TS).

Namely, the distance derived from the positions in Eqs. (18)-(20) and the distance derived from the measured time stamps in Eqs. (13)-(15) should be equal. This allows to formulate error terms as, for example, ${ε}_{up} = \left|{cτ}_{up}-{d}_{up}\right| ,$ (21) ${ε}_{down} = \left|{cτ}_{down}-{d}_{up}\right| ,$ (22) ${ε}_{RTT} = \left|{cτ}_{RTT}-{d}_{RTT}\right| ,$ (23) where c is the propagation speed of the electromagnetic wave (i.e., speed of light) and |·| denotes the element-wise absolute. These error terms may be used for purposes of OD(TS), for example for determining the one or more orbit parameters indicative of the orbit of the satellite and/or the one or more clock parameters in step S320 of method 300.

It is noted that residual measurement errors may result from each of the Sagnac effect (which can in principle be modelled and accounted for), higher order clock effects (which can be modelled at the cost of additional free parameters that need to be solved for), and noise on measurement (the statistics of which can be taken into account when designing the estimator). As the skilled person will appreciate, these errors could be treated by appropriate and well-known measures and will not affect the underlying principles of the present disclosure.

It is further noted that in the above, the ECEF frame was chosen as it allows to express the SUEs' positions as time-invariant parameters. While the SUEs' positions may be generally assumed to be known parameters, which holds true regardless of chosen reference frame, choosing an inertial reference frame (e.g., Earth-Centered-Inertial (ECI) frame) would lead to time-varying SUE positions.

### Orbit Model

Next, an example of an orbit model for modelling the orbit of the satellite (and thereby, its position at each instance of time) will be described. While reference will be primarily made to a Keplerian model of the orbit, it is understood that this shall not limit the scope of the present disclosure and that other models may be employed as well.

For example, an alternative format of orbital parameters may be the Standard Product (SP) SP3-d format (cf. [13]). Besides satellite position, velocity, and clock offset and rate/skew, the SP3 format also includes higher order parameters such as
- velocity rate in x, y, z (e.g., next-higher order ranger parameter dependent on *t*²)
- clock rate-change (e.g., next-higher order clock parameter dependent on *t*²)

These higher order parameters could be added to the parameters to be estimated by extending the clock and ranging models by the higher order terms.

SP3 further includes information on the statistics, namely standard deviation of some parameters such as
- velocity components in x, y, z
- clock rate/skew

Additional parameters to be optionally considered in the context of the present disclosure and to be computed onboard the satellite could be the standard deviation of the errors from range (e.g., up, down, RTT) as per Eqs. (21)-(23), respectively. These could be used for attributing less weight to ranges with strong error contributions by setting different weights in the weighting vector (e.g., of Eq. (34)).

Additionally or alternatively, following the Galileo Open Service (OS) F/NAV broadcast ephemeris format (cf. [14]), one could also estimate one or more of the eight following higher order orbit parameters:
- rate of change of right ascension
- rate of change of inclination angle
- amplitude of the cosine harmonic correction term to the argument of latitude
- amplitude of the sine harmonic correction term to the argument of latitude
- amplitude of the cosine harmonic correction term to the orbit radius
- amplitude of the sine harmonic correction term to the orbit radius
- amplitude of the cosine harmonic correction term to the angle of inclination
- amplitude of the sine harmonic correction term to the angle of inclination.

Returning to the non-limiting example of a Keplerian orbit, it may be assumed for modelling that the orbit of a satellite is defined by the Keplerian elements eccentricity e, semi-major axis *a*, inclination i, right ascension of the ascending node Ω, argument of the of the perigee *ω* and the mean anomaly *M*₀ at epoch *t*₀. Eqs. (24)-(29) below then give the position of the satellite defined by the orbital elements (orbit parameters) at a certain time (cf. [4]). For example, the position of the satellite SV at time *t* can be computed as ${p}_{SV} \left(t\right) = {R}_{z} \left(\frac{DR}{3600 \times 24}\left(t-{t}_{0}\right)\right) {p}_{SV - ECI} \left(t\right) ,$ (24) where $DR \left[\frac{rad}{day}\right]$ is the daily rotation of Earth, **R***_{z}*(·) denotes the rotation around *z*-axis and **p**_{SV-ECI} is the position in ECI frame defined for example as ${p}_{SV - ECI} \left(t\right) = r \left[\begin{matrix}cos \left(Ω\right) cos \left(ν+ω\right) - sin \left(Ω\right) sin \left(ν+ω\right) cos \left(i\right) \\ sin \left(Ω\right) cos \left(ν+ω\right) + cos \left(Ω\right) sin \left(ν+ω\right) cos \left(i\right) \\ sin \left(ν+ω\right) cos \left(i\right)\end{matrix}\right] ,$ (25) where *r* and *v* are the orbital radius and true anomaly respectively at time *t*, respectively, which may be defined for example as $ν = 2 arctan 2 \left(\sqrt{1 + e} sin\left(\frac{E}{2}\right),\sqrt{1 - e} cos\left(\frac{E}{2}\right)\right) ,$ (26) $r = a \left(1-e cos\left(E\right)\right) ,$ (27) with the eccentric anomaly *E* being dependent on the mean anomaly *M* as, for example, $M = E - e sin \left(E\right) .$ (28)

Eq. (28) cannot be solved in closed form for *E*. Newton's method can be used to iteratively solve for *E*. The mean anomaly may be defined as $M \left(t\right) = {M}_{0} + \sqrt{\frac{μ}{{a}^{3}}} \left(t-{t}_{0}\right) ,$ (29) where *µ* is the known gravitational parameter of the planetary body, in this case of the Earth with *µ_{Earth}* = 3.986004418 × 10¹⁴ *m*³*s*⁻².

Accordingly, the one or more orbit parameters as determined for example at step S320 of method 300 may be parameters of a Keplerian orbit. As such, they may comprise at least one of (e.g., all of) an eccentricity of the orbit, a semi-major axis, an inclination, a right ascension of the ascending node, an argument of the perigee, and a mean anomaly. In some embodiments, the eccentricity and the argument of the perigee may be set to zero, leaving only the remaining Keplerian parameters for determination.

Alternatively, the one or more orbit parameters may comprise at least one of components of a position vector of the satellite and components of a velocity vector of the satellite. The components of the position vector and the velocity vector may be expressed in the ECEF frame, for example. Alternative formats for orbit modeling for use in the context of the present disclosure for example include SP3 (cf. [13]) and Galileo F/NAV (cf. [14]).

### OD and ODTS Estimation

Next, an approach for the estimation of the satellite's parameters of interest (e.g., orbit and/or clock parameters) based on the measurements and errors (e.g., error vectors) described above will be described. This determination may be performed for example in the context of step S320 of method 300 as described above.

First, joint orbit and clock estimation will be described, where in addition to the orbital elements the clock correction parameters of the satellite are estimated. Second, a cost function for clock offset invariant orbit estimation will be described. Then, an example of an algorithm for estimation will be described, followed by a discussion about bounds and prior knowledge of parameters.

### Joint Orbit and Clock Estimation

To jointly estimate the orbit for example in terms of Keplerian orbital elements and the clock correction parameters up to first order, the estimation vector may be formulated as ${x}_{OC} = {\left[e, a, i, Ω, ω, {M}_{0}, α, β\right]}^{T} ,$ (30) with eccentricity e, semi-major axis *a*, inclination *i,* right ascension of the ascending node Ω, argument of the of the perigee *ω*, and the mean anomaly M₀ at epoch *t*₀, and clock correction parameters *α*, *β*.

For the joint orbit and clock estimation, one-way (OW) errors may be used to define the cost function as ${ε}_{MSE , OW} = \frac{1}{M} {{ε}_{OW}}^{T} {Wε}_{OW} ,$ (31) where the error vector is defined for example as ${ε}_{OW} = \left[\begin{matrix}{ε}_{up} \\ {ε}_{down}\end{matrix}\right] ∈ {ℝ}^{2 M \times 1} ,$ (32) and with $W = diag \left(w\right) ,$ (33) where diag(·) constructs a diagonal matrix from a vector.

Here, it is understood that equivalent vector or matrix formulations may be used as well, in accordance with the underlying concept described herein.

The weighting vector may be defined for example as $w = {\left[{w}_{1},{w}_{2},…,{w}_{M}\right]}^{T} ∈ {ℝ}^{2 M \times 1} s . t . {1}_{M}^{T} w = 2 M ,$ (34)

To estimate the orbit and clock parameters, vector **x***_{OC}* needs to be found that minimizes the error function of Eq. (31) as ${\hat{x}}_{OC} = {argmin}_{{x}_{OC}} {ε}_{MSE , OW} .$ (35)

It is noted that all weights in the weighting vector may be 1 in some embodiments, leading to a unit matrix ***W*,** with corresponding simplifications in the equations above. In other embodiments, the weights may be different from 1 and may be optionally adapted in the course of iterative estimation.

ALGORITHM 2 details an example of pseudocode for estimating **x***_{O}*.

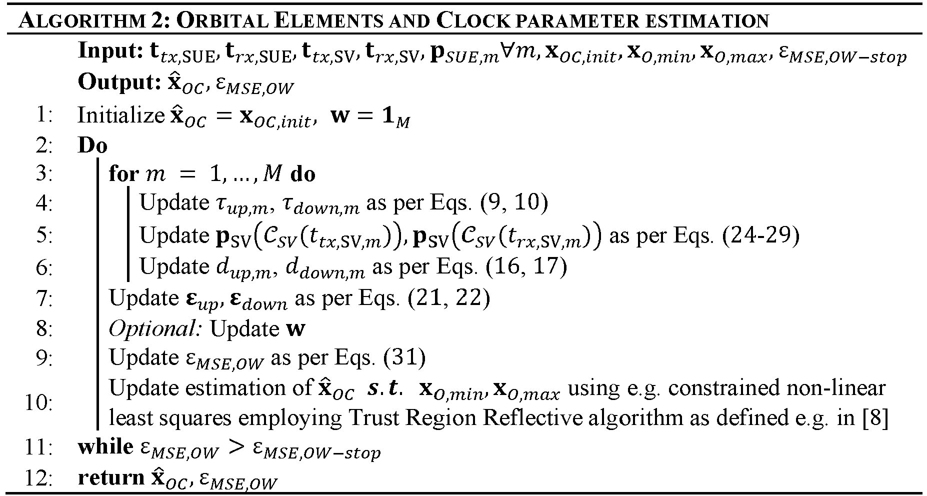

### Clock Offset Invariant Orbit Estimation

To estimate the orbit in terms of Keplerian orbital elements, the estimation vector may be formulated as ${x}_{O} = {\left[e, a, i, Ω, ω, {M}_{0}\right]}^{T} ,$ (36) with eccentricity *e*, semi-major axis *a*, inclination *i,* right ascension of the ascending node Ω, argument of the of the perigee *ω*, and the mean anomaly *M*₀ at epoch *t*₀. As noted above, at least some of these elements may be omitted, if they are a priori known (e.g., eccentricity *e* and argument of the perigee *ω*).

For clock offset invariant orbit estimation, based on the RTT, the cost function may be defined for example as ${ε}_{MSE , RTT} = \frac{1}{M} {{ε}_{RTT}}^{T} {Wε}_{RTT} .$ (37)

The weighting vector may be defined for example as $w = {\left[{w}_{1},{w}_{2},…,{w}_{M}\right]}^{T} ∈ {ℝ}^{M \times 1} s . t . {1}_{M}^{T} w = M ,$ (38) with remarks similar as for the joint determination case also applying here.

To estimate the orbit parameters, the estimation vector **x***_{O}* needs to be found that minimizes the error function of Eq. (37) as ${\hat{x}}_{O} = {argmin}_{{x}_{O}} {ε}_{MSE , RTT} .$ (39)

It is noted that all weights in the weighting vector may be 1 in some embodiments, leading to a unit matrix ***W*.**

ALGORITHM 3 details an example of pseudocode for estimating vector **x***_{O}*.

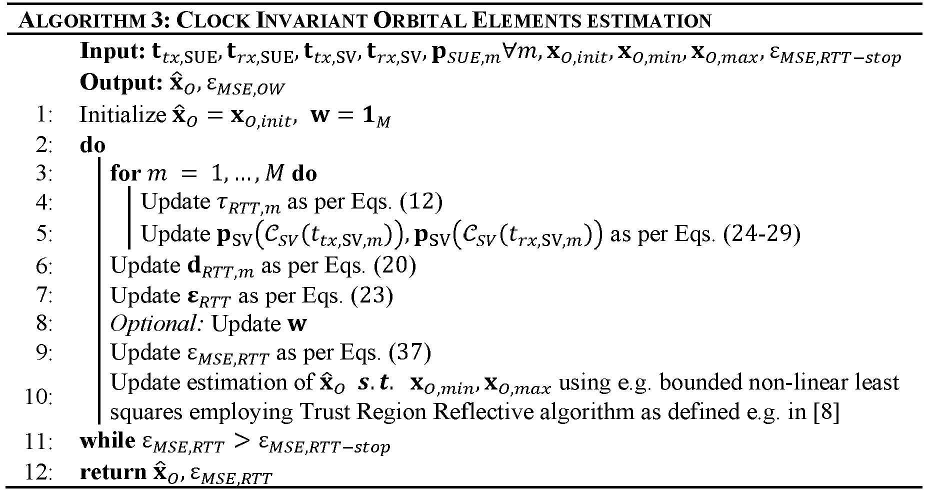

### Example Method

In line with the above, **Fig. 6** shows an example of a method 600 for implementing step S320 of method 300. Method 600 comprises steps S610 through S640, of which at least steps S610 and S620 may be performed in arbitrary order or may be performed in parallel.

At step S610, for each of the one or more time periods, first delay information for the first ground station is determined based on the first timing information. Further, second delay information for the second ground station is determined based on the second timing information.

Therein, the first delay information may relate to a propagation delay (e.g., one-way propagation delay or round-trip propagation delay) between the first ground station and the satellite. The second delay information may relate to a propagation delay (e.g., one-way propagation delay or round-trip propagation delay) between the second ground station and the satellite.

It is understood that one piece of first delay information and one piece of second delay information is thus obtained for each of the one or more time periods.

At step S620, for each of the one or more time periods, first distance information for the first ground station is determined in dependence on an estimate of the one or more orbit parameters and based on the known position of the first ground station. Further, second distance information for the second ground station is determined in dependence on the one or more orbit parameters and based on the known position of the second ground station.

Therein, the first distance information may relate to a (spatial) distance (e.g., one way distance or round-trip distance) between the first ground station and the satellite. The second distance information may relate to a (spatial) distance (e.g., one way distance or round-trip distance) between the second ground station and the satellite. The first and second distance information may be based on an (instantaneous) estimate of the position of the satellite, which may be obtained using the one or more orbit parameters. For the determination of distances, positions of the first and second ground stations and of the satellite may be expressed in an Earth-centered and Earth-fixed (ECEF) frame, for example. Further, the first and second ground stations may be assumed to have substantially zero position errors, and if applicable, substantially zero clock errors.

Respective distances, and thereby the first and second distance information, depend on (an estimate of) the instantaneous position of the satellite. With this, the first distance information may not only be based on the (estimate of the) one or more orbit parameters, but also based on a time of reception of the first uplink message at the satellite and a time of transmission of the first downlink message at the satellite. Further, the second distance information may not only be based on the (estimate of the) one or more orbit parameters, but also based on a time of reception of the second uplink message at the satellite and a time of transmission of the second downlink message at the satellite.

It is understood that one piece of first distance information and one piece of second distance information is thus obtained at step S620 for each of the one or more time periods.

Further, in accordance with the above discussion of examples of delays and distances, the first distance information may relate to an uplink distance and a downlink distance between the respective first ground station and the satellite. Alternatively, it may relate to a round-trip distance between the respective first ground station and the satellite. Likewise, the second distance information may relate to an uplink distance and a downlink distance between the respective second ground station and the satellite, or alternatively to a round-trip distance between the respective second ground station and the satellite. Here, it is understood that the first and second distance information are defined analogously (e.g., both relate to round-trip distances, etc.).

As to the delays, the first delay information may relate to an uplink delay and a downlink delay between the respective first ground station and the satellite, or alternatively to a round-trip delay between the respective first ground station and the satellite. The second delay information may relate to an uplink delay and a downlink delay between the respective second ground station and the satellite, or alternatively to a round-trip delay between the respective second ground station and the satellite. Here, it is understood that the first and second delay information are defined analogously (e.g., both relate to round-trip delays, etc.), and further, that they are defined in correspondence to the first and second distance information, to be able to construct a meaningful error function at step S630.

At step S630, an error function is determined based on the first and second delay information and based on the first and second distance information for the one or more time periods. This error function may correspond for example to the error functions defined above in Eqs. (31) or (37).

It is understood that this error function may depend on the plural pieces of delay information and distance information obtained at steps S610 and S620. For example, it may depend on any such pieces of information as currently available.

At step S640, the error function is minimized by recursively adapting the estimate of the one or more orbit parameters.

A final determination result of the one or more orbit parameters may be obtained as the estimate of the one or more orbit parameters once an end condition of the recursive determination is met (e.g., relating to a maximum number of iterations or to a lower limit for the error function).

Referring to ALGORITHM 2 or ALGORITHM 3 above, the error function may be minimized at step S640 for example using least-squares-minimization. Specifically, in some embodiments, the error function may be minimized using constrained least-squares-minimization. A non-limiting example thereof is given in [8].

Specifically, in the example software implementations of ALGORITHM 2 and ALGORITHM 3, the non-linear least squares estimator chosen is a Trust Region Reflective (TRF) algorithm in its Scipy implementation. However, other non-linear least squares estimators, in particular non-linear least squares estimators accepting constraints could be used as well to for estimating the orbit (and clock) parameters of the satellite, including but not limited to a Dogleg algorithm with rectangular trust regions, Nelder-Mead Simplex algorithm, L-BFGS-B algorithm and Truncated Newton (TNC) algorithm.

The above example method may relate to both the case of Joint Orbit and Clock Estimation and the case of Clock Offset Invariant Orbit Estimation. For Clock Offset Invariant Orbit Estimation, the first delay information and the second delay information may also depend on an estimate of the one or more clock parameters. Likewise, also the first distance information and the second distance information may further depend on the estimate of the one or more clock parameters (e.g., via a time-dependence of position estimates). Then, in this case, the error function will be minimized at step S640 by recursively and jointly adapting the estimate of the one or more orbit parameters and the estimate of the one or more clock parameters. This may be done for example using techniques as described above, noting that joint estimation of the parameters will simply result in a higher-dimensional estimation vector **x.**

Similarly to the one or more orbit parameters, a final determination result of the one or more clock parameters may be obtained as the estimate of the one or more clock parameters once an end condition of the recursive determination is met (e.g., relating to a maximum number of iterations or to a lower limit for the error function). The same applies to joint estimation of the orbit and clock parameters.

### Bounds, Initialization and Prior Knowledge of Parameters

For the example of Keplerian parameters of a circular orbit as the one or more orbit parameters, upper and lower bounds (or constraints) on the orbit parameters may be defined as ${x}_{O , min} = {\left[0,0.95{a}_{nom},0,0,0,0\right]}^{T} ,$ (40) ${x}_{O , max} = {\left[0,1.05{a}_{nom},π,2π,0,2π\right]}^{T} ,$ (41) for both the joint orbit and clock estimation and clock offset invariant orbit estimation. The nominal semimajor axis *aₙₒₘ* may be known a priori.

For the clock offset invariant orbit estimation, the initial estimation **x**_{*O*,*init*} may be randomly initialized for example as ${x}_{O , init} = U \left({x}_{O , min}, {x}_{O , max}\right) ,$ (42) were 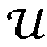 (·) denotes a uniform distribution with lower and upper bound as arguments. For the joint orbit and clock estimation, the initial estimation **x***_{OC,init}* may be initialized for example as ${x}_{OC , init} = {\left[{x}_{O , init}, 1, 0\right]}^{T} ,$ (43) where the clock error correction parameters (clock parameters) may be initialized for example to *α* = 1, *β* = 0.

For circular orbits, the eccentricity is *e* = 0 and the argument of the perigee may be set *ω* = 0. Thus, for perfectly circular orbits, these two parameters do not need to be estimated. In some embodiments, the orbit parameters may therefore not include the eccentricity e and the argument of the perigee *ω*. For example, the orbit parameters may be said to include at least the semi-major axis *a*, inclination *i,* right ascension of the ascending node Ω, and the mean anomaly *M*₀. Still, real orbits are subject to drift of the orbital parameters, potentially requiring estimation of the aforementioned two parameters even for nominally circular orbits, depending on implementations.

More generally, any of the parameters in the estimation vector **x** (e.g., any of the one or more orbit parameters and any of the one or more clock parameters) can be replaced by its known value, should said parameter be known, thereby relaxing the estimation problem.

### Implementation Example: LEO PNT Constellation

A possible implementation scenario for embodiments of the present disclosure relates to a LEO-PNT satellite of a constellation in LEO.

As described in [1], the LEO-PNT constellation is envisioned to be deployed at 600km or 1200km altitude either as a dedicated constellation or hosted as secondary payload on another constellation in LEO. The payload (cf. [2]) will embark an onboard GNSS receiver to obtain time and position from MEO GNSS signals using state of the art Precise On-board Orbit Determination (P20D) algorithms achieving decimetre accuracy or better. The Payload would further feature two-way links, thereby enabling messaging as described throughout the present disclosure.

In some implementations, the ODTS provided for by embodiments of the present disclosure could be used as a back-up ODTS solution for LEO-PNT.

### Example Apparatus

While an example method according to embodiments of the disclosure has been described above with reference to **Fig. 3****,** **5,** and **6****,** the present disclosure is understood to likewise apply to satellites or other platforms and space vehicles (equipped to be) capable of performing these methods.

An example of such satellite (or platform, or space vehicle) may comprise a transmitter and receiver unit and a processing unit. The transmitter and receiver unit may be adapted for, in each of a plurality of time periods, communicating with a respective pair of ground stations comprising a first ground station and a second ground station, to exchange a first downlink message and a first uplink message with the first ground station and to exchange a second downlink message and a second uplink message with the second ground station. The first and second downlink messages and the first and second uplink messages may be time-stamped messages. The processing unit may be adapted for determining one or more orbit parameters indicative of an orbit of the satellite based on known positions of respective first and second ground stations relating to one or more of the plurality of time periods and based on first timing information relating to times of reception and transmission of respective first uplink and downlink messages and second timing information relating to times of reception and transmission of respective second uplink and downlink messages in the one or more of the plurality of time periods.

It is understood that details as specified above for respective methods likewise apply to the satellite (or platform, or space vehicle) described herein.

### Technical Results

Next, technical results for techniques according to embodiments of the present disclosure will be described.

For this, a detailed concept of operations has been provided. A full software protype showing the feasibility and performance has been devised and operated in a simulated test.

For ODTS, software prototypes for the algorithms for message exchange and ODTS estimation and a software prototype for the estimator have been created. Computer modelling has shown good performance of the prototypes.

### Simulation Setup

For purposes of the simulation, a scenario representative of a typical embodiment has been considered. For the space segment, a mini-constellation of six satellites in low-earth-orbit (LEO) has been considered. Said satellites are spread three each in two planes with 10 deg RAAN spacing between the planes. More details are provided in **Appendix A.**

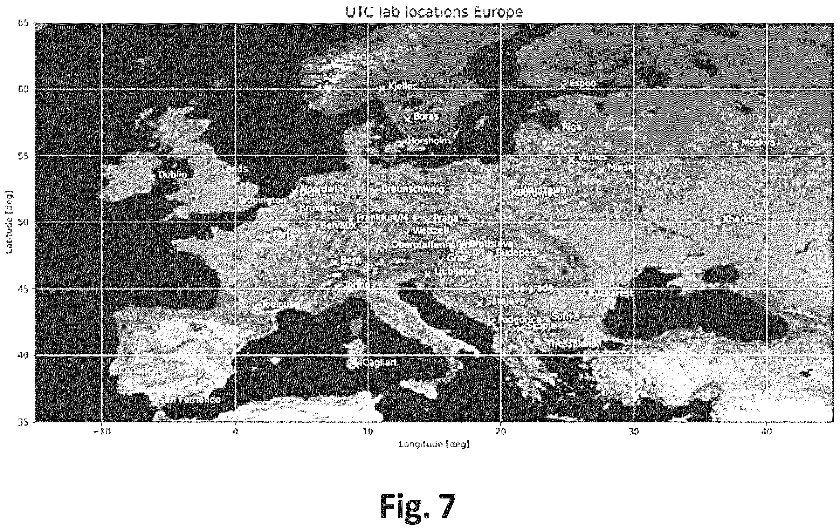

For the SUEs, 93 UTC labs distributed world-wide have been considered. For this, real data on the location of UTC timing labs has been used, for which the full list with additional details is provided in **Appendix B.** Names and locations of UTC labs in Europe are shown in **Fig. 7****.**

**Table 1** below shows the parameters chosen for the ODTS simulation. The orbit height *hₒ* and user masking angle have been chosen based on the LEO-PNT and UTC lab scenario. The choice of magnitude of clock offset *ϕᵢ* and skew *ϕ̇ᵢ* as well as the measurement noise standard deviation *σ* are conservative assumptions on the hardware onboard a LEO-PNT satellite. The chosen overlay time *Δt* may be an easy-to-achieve parameter in any real system.

**Table 1: ODTS Simulation Parameters**

| ***Symbol*** | ***Value*** | ***Unit*** | ***Description*** |
|---|---|---|---|
| *ϕᵢ* | (-10⁻², 10⁻²) | [s] | Satellite clock offset |
| *ϕ̇ᵢ* | (1 - 10⁻⁶, 1 + 10⁻⁶) | [s/s] | Satellite clock skew |
| *Δt* | 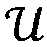 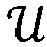 10⁻³ | [s] | Overlay time at SV and SUE |
| *hₒ* | 550 | [km] | Orbit height |
| *UMA* | 5 | [deg] | User masking angle (UMA) |
| *σ* | 100 | [m] | Measurement noise standard deviation |

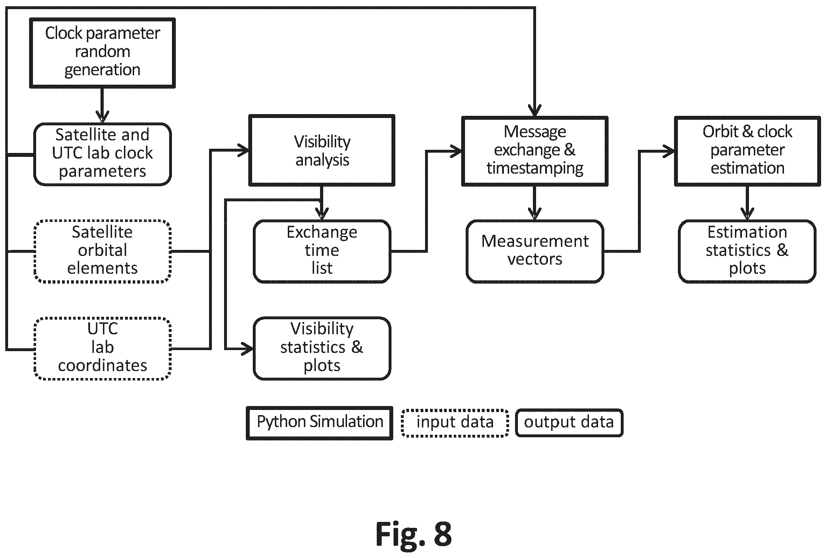

**Fig. 8** shows a possible flow of the simulation. Based on the aforementioned input on satellite orbital elements (see **Table 2** in **Appendix A)** and UTC lab coordinates (see **Table 3** in **Appendix A),** a visibility analysis of the ground stations is performed. The clock parameters offset *ϕᵢ* and skew *ϕ̇ᵢ* are drawn from a uniform distribution as per **Table 1.** The results of the random initialization are shown in **Table 4** in **Appendix B.**

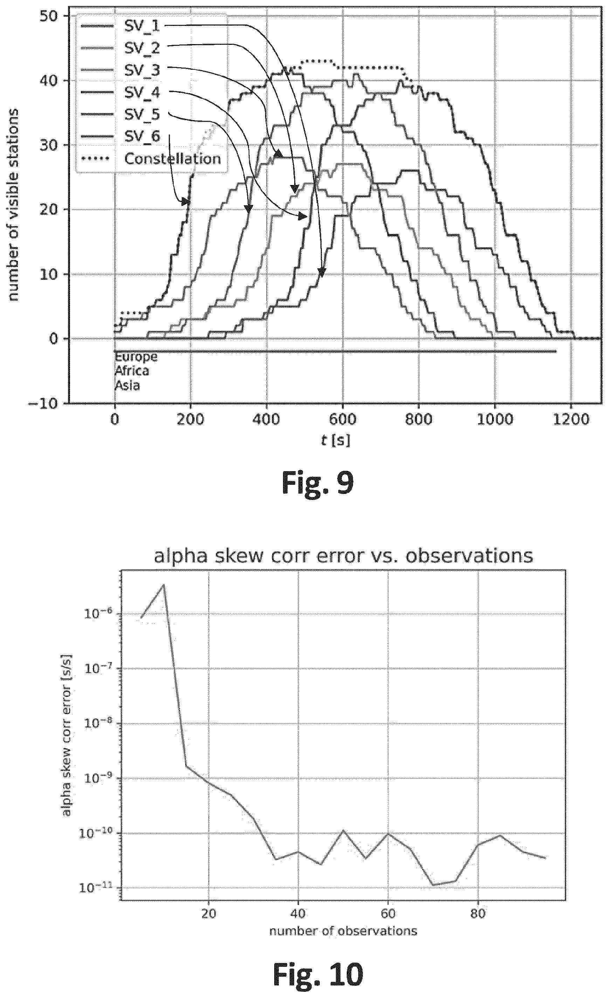

**Fig. 9** shows the first visibility window where the number of visible UTC lab stations is plotted as a function of time for each individual satellite and for the constellation as a whole, as determined by the visibility analysis based on orbital elements and UTC lab coordinates.

As shown in the simulation flow of **Fig. 8****,** the visibility analysis leads to an exchange time list. Whenever two stations are simultaneously in view of one satellite, during this period of visibility an exchange may be scheduled at the time of closest approach, i.e. when the sum of the distance of both stations to the satellite is minimal. This exchange time list is then used to perform the message exchange and timestamping as per ALGORITHM 1 resulting in the measurement vectors **t**_{*tx*,SUE}, **t**_{*rx*,SUE}, **t**_{*tx*,SV}, **t**_{*rx*,SV.} Finally, ALGORITHM 2 may be employed to estimate the clock correction parameters and orbital parameters of the satellites, the result of which are shown in the following subsection.

### Simulation Results

Next, example results for Satellite 1 of the mini-constellation will be described.

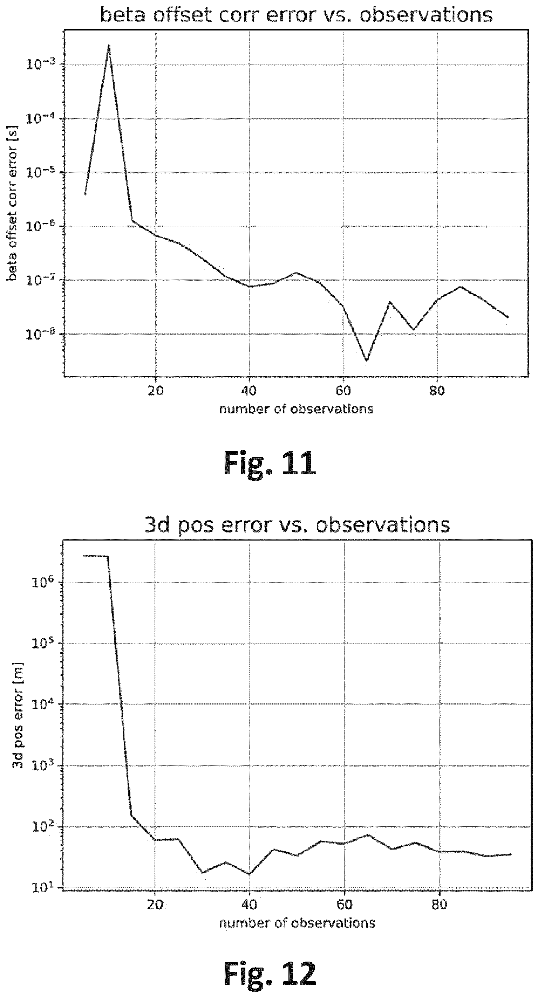

The estimation performance is measured as a function of number of observations, where one observation corresponds to one instance of a pairwise time transfer between two sensing user elements via the satellite. **Fig. 11** and **Fig. 12** respectively show the estimation error on the skew correction parameter *α* and the offset correction parameter *β* as function of the number of observations. These figures shows that skew and offset can be estimated with good accuracy after roughly 40 observations. The skew error is around 3 orders of magnitude lower than the offset, meaning that after 17 minutes, the skew error starts to dominate over the offset error, leading to the recommendation to re-estimate the parameters before the skew error becomes dominant. Clock errors down to 10⁻⁸*s* can be achieved.

Next, in **Fig. 13,** the 3D position error as function of the number of observations based on the estimation of the orbital elements is shown. It can be seen that the position can be estimated with good accuracy of 20-100 meters after 20 or more observations. With 10 or less observations, convergence is not guaranteed and the errors may become large.

In summary, the simulation has shown that the prototype joint onboard ODTS based opportunistic use of measurements for time synchronization works as intended. Even in the most challenging scenario of cold-start joint orbit and clock estimation on noisy measurements, the proposed method shows clock errors down to 10⁻⁸*s* and position errors down to 20 to 100 meters. It is expected that less noisy measurements and hot-start (continuous tracking) would further improve the results.

Considering this method is completely independent of GNSS and any ground segment (as part of the system), it provides an autonomous, cheap, fast and independent back-up ODTS with agreeable performance.

### Summary of Technical Advantages

Embodiments according to the present disclosure may provide the following new functions and features:
- ODTS in case off GNSS outage (e.g., for LEO-PNT)
- Higher density than techniques only using TT&C stations
- Better resilience to ground station outage
- No additional cost, as a service can be provided to UTC timing labs simultaneously using their existing sync procedures
- Autonomous and robust operation
- Lean and cheaper ground segment

### Interpretation

It is understood that any modules, units, or blocks described above may be implemented by a computer processor or respective computer processors, or the like. Modules, units or blocks described above may further be implemented in a cloud-based manner.

### References

[1] L. Ries, M. Cordero Limon, F.-C. Grec, M. Anghileri, R. Prieto-Cerdeira, F. Abel, J. Miguez, J. V. Perello-Gisbert, S. d'Addio, R. loannidis, A. Ostillio, M. Rapisarda and R. Sarnadas, "LEO-PNT for augmenting Europe's space-based PNT capabilities," in IEEE/ION PLANS, Monterey, California, 2023.
[2] L. Ries, M. Cordero, M. Anghileri, F. Abel and F.-C. Grec, "Satellite payloads and methods of operating same". Patent PCT/EP2023/071345, 2023.
[3] H. W. Hanson, "Fundamentals of Two-Way Time Transfer by Satellite," in 43rd Annual Frequency Control Symposium, 1989.
[4] D. Vallado, Fundamentals of Astrodynamics, Hawthorne: Microcosm Press, 2013.
[5] N. M. Freris, S. R. Graham and P. R. Kumar, "Fundamental Limits on Synchronizing Clocks Over Networks," IEEE Transactions on Automatic Control, vol. 56, pp. 1352-1364, 2011.
[6] R. T. Rajan and A.-J. van der Veen, "Joint Ranging and Synchronization for an Anchorless Network of Mobile Nodes," IEEE Transactions on Signal Processing, vol. 63, no. 8, pp. 1925-1940, 2015.
[7] R. T. Rajan, "Relative Space-Time Kinematics of an Anchorless Network," 2016.
[8] M. Branch, T. Coleman and Y. li, "A Subspace, Interior, and Conjugate Gradient Method for Large-Scale Bound-Constrained Minimization Problems," SIAM Journal on Scientific Computing, vol. 21, 1999.
[9] F. Abel, P. Sundaramoorthy and R. Rajan, "Frequency Augmented Clock Synchronization for Space-based interferometry," in 4S Symposium, Vilamoura, 2022.
[10] F. Abel, Time Synchronization for Anchorless Satellite Networks, Delft: Delft University of Technology, 2021.
[11] European Space Agency, "ESA plans for low-orbiting navigation satellites," 26 10 2022. [Online]. Available: https://www.esa.int/Applications/Navigation/ESA_plans_for_low-orbiting_navigation_satellites. [Accessed 02 05 2023].
[12] Bureau International des Poids et Mesures, "BIPM Time Department Data Base," [Online]. Available: https://webtai.bipm.org/database/showlab.html. [Accessed 3108 2023].
[13] S. Hilla, "The Extended Standard Product 3 Orbit Format (SP3-d)," 2016. [Online]. Available: https://files.igs.org/pub/data/format/sp3d.pdf
[14] European Union, "GALILEO OPEN SERVICE SIGNAL-IN-SPACE INTERFACE CONTROL DOCUMENT (OS SIS ICD)", Issue 2.1, November 2023. [Online]. Available : https://www.gsc-europa.eu/sites/default/files/sites/all/files/Galileo_OS_SIS_ICD_v2.1.pdf

### Appendix A

### Satellite Configuration

This appendix provides example details of the satellite mini-constellation used for the simulation. It is understood that techniques according to the present disclosure may be applied, for example and without intended limitation, to this and similar constellations.

**Table 2** shows the satellite orbital elements. The argument of the perigee is set to 0 for all satellites.

**Table 2: Satellite Orbital Elements**

| Satellite Number | Altitude [m] | Eccentricity | RAAN [deg] | Mean Anomaly [deg] | Inclination [deg] |
|---|---|---|---|---|---|
| 1 | 550000 | 0 | 0 | 0 | 97.5824 |
| 2 | 550000 | 0 | 0 | 10 | 97.5824 |
| 3 | 550000 | 0 | 0 | 20 | 97.5824 |
| 4 | 550000 | 0 | 10 | 0 | 97.5824 |
| 5 | 550000 | 0 | 10 | 10 | 97.5824 |
| 6 | 550000 | 0 | 10 | 20 | 97.5824 |

**Table 3** shows the satellite clock parameters as skew and offset, where the offset of the i-th satellite was generated as *ϕᵢ* = 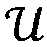 (-10⁻²*s*, 10⁻²***s***) and its skew as *ϕ̇ᵢ* = 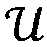 (1 - 10⁻⁶, 1 + 10⁻⁶).

**Table 3: Satellite Clock Parameters**

| **Satellite Number** | **Clock Offset *ϕ* [s]** | **Clock Skew** *ϕ̇* **[s/s]** |
|---|---|---|
| 1 | 0.000400315 | 0.999999238 |
| 2 | 0.005613682 | 0.999999864 |
| 3 | -0.006325205 | 1.000000629 |
| 4 | -0.00868199 | 1.000000028 |
| 5 | -0.00350199 | 1.000000077 |
| 6 | -0.00775807 | 1.000000419 |

### Appendix B

### World-Wide UTC Lab Locations

This appendix shows, in **Table 4,** the Country, code, and lab name of 93 UTC labs world-wide as published by the Bureau International des Poids et Mesures (cf. [12]). It furthermore shows the latitude, longitude and continent of each lab.

**Table 4: UTC Lab List Based on [12]**

| **Country** | **Code** | **Lab Name** | **Latitude** | **Longitude** | **Continent** |
|---|---|---|---|---|---|
| Argentina | TC | Argentinian-German Geodetic Observatory | -34.9207 | -57.9538 | South America |
| Poland | AO | Astrogeodynamical Observatory, Space Research Centre P.A.S. | 51.98002 | 20.72776 | Europe |
| United States of America | AP | Applied Physics Laboratory | 37.1001 | -84.1148 | North America |
| Australia | AU | National Institute of Metrology | -33.8698 | 151.2083 | Oceania |
| Austria | BE | Bundesamt für Eich- und Vermessungswesen | 48.20835 | 16.3725 | Europe |
| Hungary | MK | Government Office of Capital City of Budapest, Metrology and Technical Supervisory Department | 47.48139 | 19.14609 | Europe |
| Bulgaria | BM | Bulgarian Institute of Metrology | 42.6977 | 23.32174 | Europe |
| P.R. China | BI | Beijing Institute of Radio Metrology and Measurement | 39.90571 | 116.3913 | Asia |
| Macedonia | MA | Bureau of Metrology of Macedonia | 41.99618 | 21.43192 | Europe |
| Belarus | BY | Belarussian State Institute of Metrology | 53.90247 | 27.56182 | Europe |
| Italy | CA | Stazione Astronomica di Cagliari (Cagliari Astronomical Observatory) | 39.2172 | 9.113311 | Europe |
| Switzerland | CH | Federal Institute of Metrology (METAS) | 46.94847 | 7.452175 | Europe |
| France | CS | Centre National d'Etudes Spatiales | 43.60446 | 1.444247 | Europe |
| Mexico | CN | Centro Nacional de Metrologia | 20.59277 | -100.39 | North America |
| Panama | MP | Centro Nacional de Metrología de Panamá (CENAMEP) | 8.559559 | -81.1308 | North America |
| Denmark | DK | Dansk Fundamental Metrologi (DFM A/S) | 55.8833 | 12.50001 | Europe |
| Tunisia | DN | Laboratoire de Métrologie de la Direction Générale des Transmissions et de I'Informatique (DEF-NAT) | 33.84394 | 9.400138 | Africa |
| Germany | DL | Deutsche Zentrum für Luft - und Raumfahrt (German Aerospace Centre) | 48.07326 | 11.26491 | Europe |
| Serbia | ZM | Directorate of Measures and Precious Metals | 44.81781 | 20.4569 | Europe |
| Germany | DT | Deutsche Telekom AG | 50.10665 | 8.662581 | Europe |
| Greece | El | Hellenic Institute of Metrology | 40.64032 | 22.93527 | Europe |
| The Netherlands | ES | European Space Agency | 52.26989 | 4.452686 | Europe |
| Hong Kong (China) | HK | Hong Kong Observatory | 22.27933 | 114.1628 | Asia |
| Bolivia | BO | Instituto Boliviano De Metrologia | -16.4955 | -68.1336 | South America |
| Costa Rica | CE | Laboratorio Costarricense de Metrologia | 9.932543 | -84.0796 | North America |
| Indonesia | KI | Standardization Agency of Indonesia | -6.17525 | 106.827 | Asia |
| Germany | IF | Bundesamt für Kartographie und Geodäsie (Federal Agency for Cartography and Geodesy) | 49.14496 | 12.88596 | Europe |
| Argentina | IG | Instituto Geográfico Nacional | -34.6076 | -58.4371 | South America |
| Bosnia and Herzegovina | BH | Institute of Metrology of Bosnia and Herzegovina | 43.85198 | 18.38669 | Europe |
| Peru | CP | Instituto Nacional de Calidad (INACAL) of Peru | -12.0621 | -77.0365 | South America |
| Colombia | IC | Instituto Nacional de Metrología of Colombia | 4.652954 | -74.0836 | South America |
| Israel | IL | National Physical Laboratory of Israel | 31.79592 | 35.21198 | Asia |
| Argentina | IN | Instituto Nacional de Tecnología Industrial | -34.6076 | -58.4371 | South America |
| Brazil | NX | National Institute for Metrology, Quality and Technology (INMETRO) | -22.911 | -43.2094 | South America |
| Portugal | IP | Instituto Portugues da Qualidade | 38.65374 | -9.20896 | Europe |
| Italy | IT | Istituto Nazionale di Ricerca Metrologica (INRIM) | 45.06776 | 7.682489 | Europe |
| P.R. China | JA | Joint Atomic Time Commission | 34.36844 | 109.2093 | Asia |
| Norway | JV | Justervesenet | 59.97387 | 11.04759 | Europe |
| Kenya | KE | Kenya Bureau of Standards | -1.28325 | 36.81724 | Africa |
| Rep. of Korea | KR | Korea Research Institute of Standards and Science (KRISS), | 36.3497 | 127.3849 | Asia |
| Kazakhstan | KZ | Kazakhstan Institute of Standardization and Metrology | 51.12822 | 71.43067 | Asia |
| United Kingdom | LD | University of Leeds | 53.79742 | -1.54379 | Europe |
| Brazil | LR | Laboratório de Referência de Tempo e Espaço | -22.018 | -47.8912 | South America |
| Lithuania | LT | Center for Physical Sciences and Technology (VMT/FTMC) | 54.68705 | 25.28291 | Europe |
| Luxembourg | LU | Bureau Luxembourgeois de Métrologie (ILNAS) | 49.51281 | 5.935415 | Europe |
| Latvia | LV | Latvian National Metrology Centre | 56.9494 | 24.10518 | Europe |
| Mongolia | MN | Mongolian Agency for Standardization and Metrology | 47.91027 | 106.9357 | Asia |
| Montenegro | ME | Bureau of Metrology - Laboratory for time and frequency | 42.44152 | 19.26211 | Europe |
| Finland | MI | VTT Technical Research Centre of Finland Ltd, Centre for Metrology | 60.20477 | 24.65684 | Europe |
| New Zealand | MS | Measurement Standards Laboratory | -41.2126 | 174.9058 | Oceania |
| Saudi Arabia | MC | MAKKAH Time Centre - King Abdulah Centre for Crescent Observations and Astronomy | 21.42085 | 39.82687 | Asia |
| Japan | NA | National Astronomical Observatory | 39.13898 | 141.1465 | Asia |
| Japan | NC | National Institute of Information and Communications Technology | 35.68127 | 139.7577 | Asia |
| P.R. China | IM | National Institute of Metrology | 39.90571 | 116.3913 | Asia |
| Romania | MB | National Institute of Metrology | 44.43614 | 26.10272 | Europe |
| Thailand | MT | National Institute of Metrology (Thailand) | 14.04867 | 100.564 | Asia |
| Egypt | IS | National Institute for Standards | 30.04439 | 31.23573 | Africa |
| United States of America | NI | National Institute of Standards and Technology | 40.01499 | -105.271 | North America |
| Japan | NM | National Metrology Institute of Japan | 36.08333 | 140.0773 | Asia |
| Malaysia | LS | National Metrology Laboratory of SIRIM Berhad | 2.760209 | 101.7369 | Asia |
| United Kingdom | NP | National Physical Laboratory | 51.42778 | -0.33365 | Europe |
| India | LI | National Physical Laboratory | 28.6139 | 77.20901 | Asia |
| Canada | NR | National Research Council of Canada | 45.42088 | -75.6901 | North America |
| United States of America | RL | U.S. Naval Research Laboratory | 38.89504 | -77.0365 | North America |
| Ireland | IE | National Standards Authority of Ireland's National Metrology Laboratory (NSAI NML) | 53.3498 | -6.2603 | Europe |
| P.R. China | NT | National Time Service Center of China | 34.36844 | 109.2093 | Asia |
| Argentina | ON | Observatorio Naval | -34.6076 | -58.4371 | South America |
| Brazil | RJ | Observatório Nacional | -22.911 | -43.2094 | South America |
| France | OP | Laboratoire national de métrologie et d'essais. Systémes de references Temps-Espace, Observatoire de Paris (LNE-SYRTE) | 48.8535 | 2.348392 | Europe |
| Belgium | OR | Observatoire Royal de Belgique | 50.84656 | 4.351697 | Europe |
| Poland | PL | Consortium of laboratories in Poland | 52.23196 | 21.00672 | Europe |
| Germany | PT | Physikalisch-Technische Bundesanstalt | 52.26466 | 10.52361 | Europe |
| Spain | RO | Real Instituto y Observatorio de la Armada | 36.46439 | -6.1982 | Europe |
| Saudi Arabia | SA | Saudi Standards, Metrology and Quality Organization | 24.63892 | 46.71601 | Asia |
| Hong Kong (China) | SC | Standards and Calibration Laboratory | 22.27933 | 114.1628 | Asia |
| Singapore | SG | National Metrology Centre - Agency for Science, Technology and Research (A*STAR) | 1.357107 | 103.8195 | Asia |
| Slovenia | SI | Slovenian Institute of Quality and Metrology | 46.05003 | 14.50693 | Europe |
| Sri Lanka | SL | Measurement Units, Standards and Services Department (MUSSD) | 6.938747 | 79.85411 | Asia |
| Belgium | SD | Metrology Division of the Quality and Safety Department-Scientific Metrology | 50.84656 | 4.351697 | Europe |
| Slovakia | SM | Slovenský Metrologický Ústav (Slovak Institute of Metrology) | 48.1517 | 17.10931 | Europe |
| Sweden | SP | Research Institutes of Sweden AB (RISE) | 57.72108 | 12.94074 | Europe |
| Russian Federation | SU | Russian metrological institute of technical physics and radio engineering (FSUE VNIIFTRI) | 55.75045 | 37.61749 | Europe |
| Chinese Taipei | TL | Telecommunication Laboratories | 47.50615 | 8.603413 | Asia |
| Czech Republic | TP | Institute of Photonics and Electronics, Czech Academy of Sciences (IPE/ASCR) | 50.08747 | 14.42125 | Europe |
| Austria | TU | Technische Universität | 47.07087 | 15.43828 | Europe |
| Ukraine | UA | National Scientific Centre Institute of Metrology"" | 49.99232 | 36.23101 | Europe |
| The United Arab Emirates | AE | Emirates Metrology Institute (EMI/UAE) | 24.45384 | 54.3774 | Asia |
| Türkiye | UM | Ulusai Metroloji Enstitüsü, Marmara Research Centre, (National Metrology Institute) | 40.80067 | 29.43177 | Asia |
| United States of America | US | U.S. Naval Observatory | 38.89504 | -77.0365 | North America |
| Uruguay | UY | Administración Nacional de Usinas y Transmisiones | -34.9059 | -56.1913 | South America |
| Vietnam | VM | Vietnam Metrology Institute | 21.02832 | 105.854 | Asia |
| The Netherlands | VS | VSL, Dutch Metrology Institute | 51.99946 | 4.362725 | Europe |
| South Africa | ZA | National Metrology Institute of South Africa (NMISA) | -25.7459 | 28.18791 | Africa |

### Appendix C

### Timing-Only Message Exchange Procedure

This appendix shows an example of a reduced version of ALGORITHM 1, where only those measurements required for timing measurements for ODTS are represented. Any messages not required for ranging, but only for information dissemination were removed, as they are not strictly necessary for the position estimation procedures shows in ALGORITHM 2 and ALGORITHM 3.

Accordingly, ALGORITHM 1 shows a non-limiting example embodiment while ALGORITHM 4 shows the minimum necessary message exchange for the time measurements required for ODTS according to the present disclosure.

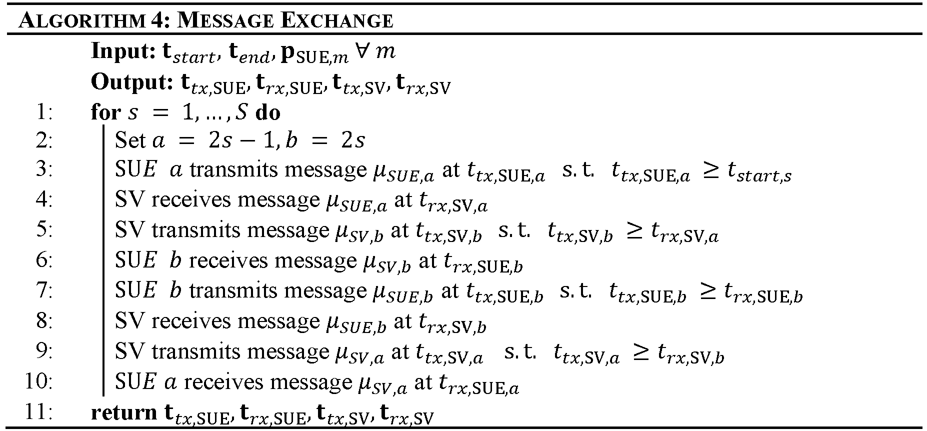

## Claims

1. A method, comprising:
at a satellite (110), in each of a plurality of time periods, communicating with a respective pair of ground stations (120, 130) comprising a first ground station (120) and a second ground station (130), to exchange a first downlink message (54) and a first uplink message (51) with the first ground station (120) and to exchange a second downlink message (52) and a second uplink message (53) with the second ground station (130), **characterized in that** the first and second downlink messages (54, 52) and the first and second uplink messages (51, 53) are time-stamped messages (S310); and
determining (S320) one or more orbit parameters indicative of an orbit of the satellite (110) based on known positions of respective first and second ground stations (120, 130) relating to one or more of the plurality of time periods and based on first timing information relating to times of reception and transmission of respective first uplink and downlink messages (51, 54) and second timing information relating to times of reception and transmission of respective second uplink and downlink messages (53, 52) in the one or more of the plurality of time periods (S320).

2. The method according to claim 1, wherein determining the one or more orbit parameters comprises:
determining, for each of the one or more time periods, first delay information for the first ground station (120) based on the first timing information and second delay information for the second ground station (130) based on the second timing information (S610);
determining, for each of the one or more time periods, first distance information for the first ground station (120) in dependence on an estimate of the one or more orbit parameters and based on the known position of the first ground station (120), and second distance information for the second ground station (130) in dependence on the one or more orbit parameters and based on the known position of the second ground station (130) (S620);
determining an error function based on the first and second delay information and the first and second distance information for the one or more time periods (S630); and
minimizing the error function by recursively adapting the estimate of the one or more orbit parameters (S640).

3. The method according to claim 2, wherein the first distance information relates to an uplink distance and a downlink distance between the respective first ground station (120) and the satellite (110), or to a round-trip distance between the respective first ground station (120) and the satellite (110), and wherein the second distance information relates to an uplink distance and a downlink distance between the respective second ground station (130) and the satellite (110), or to a round-trip distance between the respective second ground station (130) and the satellite (110); and/or
wherein the first delay information relates to an uplink delay and a downlink delay between the respective first ground station (120) and the satellite (110), or to a round-trip delay between the respective first ground station (120) and the satellite (110), and wherein the second delay information relates to an uplink delay and a downlink delay between the respective second ground station (130) and the satellite (110), or to a round-trip delay between the respective second ground station (130) and the satellite (110).

4. The method according to claim 2 or 3, wherein the first distance information is further based on a time of reception of the first uplink message (51) at the satellite (110) and a time of transmission of the first downlink message (54) at the satellite (110), and the second distance information is further based on a time of reception of the second uplink message (53) at the satellite (110) and a time of transmission of the second downlink message (52) at the satellite (110).

5. The method according to any one of the preceding claims, further comprising determining one or more clock parameters of a satellite clock of the satellite (110) based on the known positions of respective first and second ground stations (120, 130) relating to the one or more of the plurality of time periods and based on the first timing information and the second timing information in the one or more of the plurality of time periods.

6. The method according to claim 5 when depending on claim 2,
wherein the first delay information and the second delay information depend on an estimate of the one or more clock parameters;
wherein the first distance information and the second distance information further depend on the estimate of the one or more clock parameters; and
wherein the error function is minimized by recursively and jointly adapting the estimate of the one or more orbit parameters and the estimate of the one or more clock parameters.

7. The method according to any one of claims 2 to 6, wherein the error function is minimized using least-squares-minimization; or
wherein the error function is minimized using constrained least-squares-minimization.

8. The method according to claim 5 or any claim depending on claim 5, wherein the one or more clock parameters comprise parameters of an affine clock model; and/or
wherein the one or more clock parameters comprise a clock offset in relation to absolute time and optionally a clock skew in relation to absolute time.

9. The method according to any one of the preceding claims, wherein the one or more orbit parameters comprise at least one of an eccentricity of the orbit, a semi-major axis, an inclination, a right ascension of the ascending node, an argument of the perigee, and a mean anomaly; or
wherein the one or more orbit parameters comprise at least one of components of a position vector of the satellite (110) and components of a velocity vector of the satellite (110).

10. The method according to any one of the preceding claims, wherein a sequence of exchanged messages in each time period is given by: first uplink message (51), second downlink message (52), second uplink message (53), first downlink message (54).

11. The method according to any one of the preceding claims, wherein each of the first and second uplink messages (51, 53) and the first and second downlink messages (54, 52) includes an identifier of a transmitter (122, 132) of the respective message; and/or
wherein the second uplink message (53) comprises an indication of a time of reception of the second downlink message (52) at the second ground station (130).

12. The method according to any one of the preceding claims, further comprising, at the satellite (110):
in each of the plurality of time periods, receiving a third uplink message from the first ground station (120) (S510); and optionally,
transmitting one or more third downlink messages for reception by the first and second ground stations (120, 130) (S520).

13. The method according to claim 12, wherein the third uplink message comprises an indication of a time of reception of the first downlink message (54) at the first ground station (120); and/or
wherein each of the one or more third downlink messages comprises indications of times of reception of the first and second uplink messages (51, 53) at the satellite (110), of times of transmission of the first and second downlink messages (54, 52) at the satellite (110), and of the one or more orbit parameters, and optionally the second uplink message (53) and the third uplink message.

14. The method according to any one of the preceding claims, further comprising, at the satellite (110), exchanging signaling with a second satellite via an inter satellite link, to provide at least one of:
intersatellite ranging;
intersatellite time transfer;
information on the orbit parameters of the first satellite, second satellite, and/or a third satellite different from the first and second satellites;
information on clock parameters of the first satellite, second satellite, and/or third satellite;
timing information in relation to the first and/or second satellite;
information on positions of the first and/or second ground stations (120, 130);
information on the status or confidence of the determination of the one or more orbit parameters of the first satellite;
information for jointly solving an OD or ODTS estimation problem of the first satellite, second satellite, and/or third satellite; and/or
information for jointly solving an OD or ODTS estimation problem of the first satellite, second satellite, and/or third satellite by means of a distributed consensus algorithm.

15. The method according to any one of the preceding claims, wherein the first and second ground stations (120, 130) are anchor users.

16. A satellite (110) comprising:
a transmitter (122, 132) and receiver (123, 133) unit for, in each of a plurality of time periods, communicating with a respective pair of ground stations (120, 130) comprising a first ground station (120) and a second ground station (130), to exchange a first downlink message (54) and a first uplink message (51) with the first ground station (120) and to exchange a second downlink message (52) and a second uplink message (53) with the second ground station (130), **characterized in that** the first and second downlink messages (54, 52) and the first and second uplink messages (51, 53) are time-stamped messages; and
a processing unit for determining one or more orbit parameters indicative of an orbit of the satellite (110) based on known positions of respective first and second ground stations (120, 130) relating to one or more of the plurality of time periods and based on first timing information relating to times of reception and transmission of respective first uplink and downlink messages and second timing information relating to times of reception and transmission of respective second uplink and downlink messages in the one or more of the plurality of time periods.

## Patentansprüche

1. Verfahren, das Folgendes umfasst:
an einem Satelliten (110) in jedem von mehreren Zeitperioden Kommunizieren mit einem jeweiligen Paar Bodenstationen (120, 130), das eine erste Bodenstation (120) und eine zweite Bodenstation (130) umfasst, um eine erste Downlinknachricht (54) und eine erste Uplinknachricht (51) mit der ersten Bodenstation (120) auszutauschen und eine zweite Downlinknachricht (52) und eine zweite Uplinknachricht (53) mit der zweiten Bodenstation (130) auszutauschen, **dadurch gekennzeichnet, dass** die ersten und zweiten Downlinknachrichten (54, 52) und die ersten und zweiten Uplinknachrichten (51, 53) mit einer Zeitmarkierung versehene Nachrichten sind (S310); und
Bestimmen (S320) eines oder mehrerer Orbitparameter, die für einen Orbit des Satelliten (110) kennzeichnend sind, basierend auf bekannten Positionen jeweiliger erster und zweiter Bodenstationen (120, 130) bezüglich eines oder mehrerer der mehreren Zeitperioden und basierend auf ersten Zeitverlaufsinformationen bezüglich Empfangs- und Sendezeiten jeweiliger erster Uplink- und Downlinknachrichten (51, 54) und zweiter Zeitverlaufsinformationen bezüglich Empfangs- und Sendezeiten jeweiliger zweiter Uplink- und Downlinknachrichten (53, 52) in dem einen oder den mehreren der mehreren Zeitperioden (S320).

2. Verfahren nach Anspruch 1, wobei Bestimmen des einen oder der mehreren Orbitparameter Folgendes umfasst:
Bestimmen erster Verzögerungsinformationen für die erste Bodenstation (120) basierend auf den ersten Zeitverlaufsinformationen und zweiter Verzögerungsinformationen für die zweite Bodenstation (130) basierend auf den zweiten Zeitverlaufsinformationen für jeden der einen oder mehreren Zeitperioden (S610);
Bestimmen erster Entfernungsinformationen für die erste Bodenstation (120) in Abhängigkeit von einer Schätzung des einen oder der mehreren Orbitparameter und basierend auf der bekannten Position der ersten Bodenstation (120) und zweiter Entfernungsinformationen für die zweite Bodenstation (130) in Abhängigkeit von dem einen oder den mehreren Orbitparametern und basierend auf der bekannten Position der zweiten Bodenstation (130) für jeden der einen oder mehreren Zeitperioden (S620);
Bestimmen einer Fehlerfunktion basierend auf den ersten und zweiten Verzögerungsinformationen und den ersten und zweiten Entfernungsinformationen für den einen oder die mehreren Zeitperioden (S630); und
Minimieren der Fehlerfunktion durch rekursives Anpassen der Schätzung des einen oder der mehreren Orbitparameter (S640).

3. Verfahren nach Anspruch 2, wobei sich die ersten Entfernungsinformationen auf eine Uplinkentfernung und eine Downlinkentfernung zwischen der jeweiligen ersten Bodenstation (120) und dem Satelliten (110) oder auf eine Umlaufentfernung zwischen der jeweiligen ersten Bodenstation (120) und dem Satelliten (110) beziehen und wobei sich die zweiten Entfernungsinformationen auf eine Uplinkentfernung und eine Downlinkentfernung zwischen der jeweiligen zweiten Bodenstation (130) und dem Satelliten (110) oder auf eine Umlaufentfernung zwischen der jeweiligen zweiten Bodenstation (130) und dem Satelliten (110) beziehen; und/oder wobei sich die ersten Verzögerungsinformationen auf eine Uplinkverzögerung und eine Downlinkverzögerung zwischen der jeweiligen ersten Bodenstation (120) und dem Satelliten (110) oder auf eine Umlaufverzögerung zwischen der jeweiligen ersten Bodenstation (120) und dem Satelliten (110) beziehen und wobei sich die zweiten Verzögerungsinformationen auf eine Uplinkverzögerung und eine Downlinkverzögerung zwischen der jeweiligen zweiten Bodenstation (130) und dem Satelliten (110) oder auf eine Umlaufverzögerung zwischen der jeweiligen zweiten Bodenstation (130) und dem Satelliten (110) beziehen.

4. Verfahren nach Anspruch 2 oder 3, wobei die ersten Entfernungsinformationen ferner auf einer Empfangszeit der ersten Uplinknachricht (51) am Satelliten (110) und einer Sendezeit der ersten Downlinknachricht (54) am Satelliten (110) basieren und die zweiten Entfernungsinformationen ferner auf einer Empfangszeit der zweiten Uplinknachricht (53) am Satelliten (110) und einer Sendezeit der zweiten Downlinknachricht (52) am Satelliten (110) basieren.

5. Verfahren nach irgendeinem der vorgehenden Ansprüche, das ferner Bestimmen eines oder mehrerer Taktparameter einer Satellitenuhr des Satelliten (110) basierend auf den bekannten Positionen jeweiliger erster und zweiter Bodenstationen (120, 130) bezüglich des einen oder der mehreren der mehreren Zeitperioden und basierend auf den ersten Zeitverlaufsinformationen und den zweiten Zeitverlaufsinformationen in dem einen oder den mehreren der mehreren Zeitperioden umfasst.

6. Verfahren nach Anspruch 5, wenn von Anspruch 2 abhängig, wobei die ersten Verzögerungsinformationen und die zweiten Verzögerungsinformationen von einer Schätzung des einen oder der mehreren Taktparameter abhängen;
wobei die ersten Entfernungsinformationen und die zweiten Entfernungsinformationen von der Schätzung des einen oder der mehreren Taktparameter abhängen und
wobei die Fehlerfunktion durch rekursives und gemeinsames Anpassen der Schätzung des einen oder der mehreren Orbitparameter und der Schätzung des einen oder der mehreren Taktparameter minimiert wird.

7. Verfahren nach irgendeinem der Ansprüche 2 bis 6, wobei die Fehlerfunktion mithilfe von Fehlerquadratminimierung minimiert wird; oder
wobei die Fehlerfunktion mithilfe von eingeschränkter Fehlerquadratminimierung minimiert wird.

8. Verfahren nach Anspruch 5 oder irgendeinem Anspruch, der von Anspruch 5 abhängt, wobei der eine oder die mehreren Taktparameter Parameter eines affinen Zeitmodells umfassen und/oder
wobei der eine oder die mehreren Taktparameter einen Zeitoffset bezüglich absoluter Zeit und optional einen Taktversatz bezüglich absoluter Zeit umfassen.

9. Verfahren nach irgendeinem der vorgehenden Ansprüche, wobei der eine oder die mehreren Orbitparameter mindestens eines von einer Exzentrizität des Orbits, einer große Halbachse, einer Inklination, einer Rektaszension des aufsteigenden Knotens, eines Arguments des Perigäums und einer mittlere Anomalie umfassen oder
wobei der eine oder die mehreren Orbitparameter mindestens eines von Komponenten eines Positionsvektors des Satelliten (110) und Komponenten eines Geschwindigkeitsvektors des Satelliten (110) umfassen.

10. Verfahren nach irgendeinem der vorgehenden Ansprüche, wobei eine Abfolge ausgetauschter Nachrichten in jedem Zeitraum durch Folgendes gegeben ist: erste Uplinknachricht (51), zweite Downlinknachricht (52), zweite Uplinknachricht (53), erste Downlinknachricht (54).

11. Verfahren nach irgendeinem der vorgehenden Ansprüche, wobei jede der ersten und zweiten Uplinknachrichten (51, 53) und der ersten und zweiten Downlinknachrichten (54, 52) einen Identifikator eines Senders (122, 132) der jeweiligen Nachricht beinhalten und/oder
wobei die zweite Uplinknachricht (53) eine Anzeige einer Empfangszeit der zweiten Downlinknachricht (52) an der zweiten Bodenstation (130) umfasst.

12. Verfahren nach irgendeinem der vorgehenden Ansprüche, der ferner Folgendes, am Satelliten (110), umfasst:
in jedem der mehreren Zeitperioden Empfangen einer dritten Uplinknachricht von der ersten Bodenstation (120) (S510) und optional
Senden einer oder mehrerer dritter Downlinknachrichten zum Empfang durch die ersten und zweiten Bodenstationen (120, 130) (S520).

13. Verfahren nach Anspruch 12, wobei die dritte Uplinknachricht eine Anzeige einer Empfangszeit der ersten Downlinknachricht (54) an der ersten Bodenstation (120) umfasst und/oder
wobei eine oder mehrere der dritten Downlinknachrichten Anzeigen von Empfangszeiten der ersten und zweiten Uplinknachrichten (51, 53) am Satelliten (110), von Sendezeiten der ersten und zweiten Downlinknachrichten (54, 52) am Satelliten (110) und der einen oder mehreren Orbitparameter und optional der zweiten Uplinknachricht (53) und der dritten Uplinknachricht umfassen.

14. Verfahren nach einem der vorgehenden Ansprüche, das ferner am Satelliten (110) Austauschen von Signalisierung mit einem zweiten Satelliten über eine Intersatellitenverbindung umfasst, um mindestens eines von Folgendem bereitzustellen:
Intersatelliten-Entfernungsbestimmung;
Intersatelliten-Zeitübertragung;
Informationen über die Orbitparameter des ersten Satelliten, zweiten Satelliten und/oder eines dritten Satelliten, der von den ersten und zweiten Satelliten verschieden ist;
Informationen über die Taktparameter des ersten Satelliten, zweiten Satelliten und/oder dritten Satelliten;
Zeitverlaufsinformationen bezüglich des ersten und/oder zweiten Satelliten;
Informationen über Positionen der ersten und/oder zweiten Bodenstationen (120, 130);
Informationen über den Status oder die Zuverlässigkeit der Bestimmung des einen oder der mehreren Orbitparameter des ersten Satelliten;
Informationen zum gemeinsamen Lösen eines OD- oder ODTS-Abschätzungsproblems des ersten Satelliten, zweiten Satelliten und/oder dritten Satelliten und/oder
Informationen zum gemeinsamen Lösen eines OD- oder ODTS-Abschätzungsproblems des ersten Satelliten, zweiten Satelliten und/oder dritten Satelliten mittels eines verteilten Konsensalgorithmus.

15. Verfahren nach einem der vorgehenden Ansprüche, wobei die ersten und zweiten Bodenstationen (120, 130) Ankernutzer sind.

16. Satellit (110), der Folgendes umfasst:
eine Sender- (122, 132) und Empfänger- (123, 133) - Einheit zum Kommunizieren mit einem jeweiligen Paar Bodenstationen (120, 130), das eine erste Bodenstation (120) und eine zweite Bodenstation (130) umfasst, in jedem von mehreren Zeitperioden, um eine erste Downlinknachricht (54) und eine erste Uplinknachricht (51) mit der ersten Bodenstation (120) auszutauschen und eine zweite Downlinknachricht (52) und eine zweite Uplinknachricht (53) mit der zweiten Bodenstation (130) auszutauschen, **dadurch gekennzeichnet, dass** die ersten und zweiten Downlinknachrichten (54, 52) und die ersten und zweiten Uplinknachrichten (51, 53) mit einer Zeitmarkierung versehene Nachrichten sind; und
eine Verarbeitungseinheit zum Bestimmen eines oder mehrerer Orbitparameter, die für einen Orbit des Satelliten (110) kennzeichnend sind, basierend auf bekannten Positionen jeweiliger erster und zweiter Bodenstationen (120, 130) bezüglich eines oder mehrerer der mehreren Zeitperioden und basierend auf ersten Zeitverlaufsinformationen bezüglich Empfangs- und Sendezeiten jeweiliger erster Uplink- und Downlinknachrichten und zweiten Zeitverlaufsinformationen bezüglich Empfangs- und Sendezeiten jeweiliger zweiter Uplink- und Downlinknachrichten in dem einen oder den mehreren der mehreren Zeitperioden.

## Revendications

1. Procédé comprenant :
au niveau d'un satellite (110), au cours de chacune d'une pluralité de périodes temporelles, la communication avec une paire respective de stations au sol (120, 130) comprenant une première station au sol (120) et une deuxième station au sol (130), pour échanger un premier message de liaison descendante (54) et un premier message de liaison montante (51) avec la première station au sol (120) et pour échanger un deuxième message de liaison descendante (52) et un deuxième message de liaison montante (53) avec la deuxième station au sol (130), **caractérisé en ce que** les premier et deuxième messages de liaison descendante (54, 52) et les premier et deuxième messages de liaison montante (51, 53) sont des messages horodatés (S310) ; et
la détermination (S320) d'un ou plusieurs paramètres d'orbite indicatifs d'une orbite du satellite (110) sur la base de positions connues des première et deuxième stations au sol respectives (120, 130) relatives à une ou plusieurs de la pluralité de périodes temporelles et sur la base de premières informations de temporisation relatives aux heures de réception et d'émission des premier et deuxième messages de liaison montante et descendante respectifs (51, 54) et de deuxièmes informations de temporisation relatives aux heures de réception et d'émission des deuxième et premier messages de liaison montante et descendante respectifs (53, 52) au cours d'une ou plusieurs de la pluralité de périodes temporelles (S320).

2. Procédé selon la revendication 1, dans lequel la détermination d'un ou plusieurs paramètres d'orbite comprend :
la détermination, pour chacune d'une ou plusieurs périodes temporelles, de premières informations de retard pour la première station au sol (120) sur la base des premières informations de temporisation et de deuxièmes informations de retard pour la deuxième station au sol (130) sur la base des deuxièmes informations de temporisation (S610) ;
la détermination, pour chacune d'une ou plusieurs périodes temporelles, des premières informations de distance pour la première station au sol (120) en fonction d'une estimation d'un ou plusieurs paramètres orbitaux et sur la base de la position connue de la première station au sol (120) et des deuxièmes informations de distance pour la deuxième station au sol (130) en fonction d'un ou plusieurs paramètres orbitaux et sur la base de la position connue de la deuxième station au sol (130) (S620) ;
la détermination d'une fonction d'erreur sur la base des premières et deuxièmes informations de retard et des premières et deuxièmes informations de distance pour une ou plusieurs périodes temporelles (S630) ; et
la minimisation de la fonction d'erreur en adaptant de manière récursive l'estimation d'un ou plusieurs paramètres orbitaux (S640).

3. Procédé selon la revendication 2, dans lequel les premières informations de distance se rapportent à une distance de liaison montante et à une distance de liaison descendante entre la première station au sol (120) respective et le satellite (110) ou à une distance aller-retour entre la première station au sol (120) respective et le satellite (110) et dans lequel les deuxièmes informations de distance se rapportent à une distance de liaison montante et à une distance de liaison descendante entre la deuxième station au sol (130) respective et le satellite (110) ou à une distance aller-retour entre la deuxième station au sol (130) respective et le satellite (110) ; et/ou
dans lequel les premières informations de retard se rapportent à un retard de liaison montante et à un retard de liaison descendante entre la première station au sol (120) respective et le satellite (110) ou à un retard aller-retour entre la première station au sol (120) respective et le satellite (110) et dans lequel les deuxièmes informations de retard se rapportent à un retard de liaison montante et à un retard de liaison descendante entre la deuxième station au sol (130) respective et le satellite (110) ou à un retard aller-retour entre la deuxième station au sol (130) respective et le satellite (110).

4. Procédé selon la revendication 2 ou 3, dans lequel la première information de distance est en outre basée sur une heure de réception du premier message de liaison montante (51) au niveau du satellite (110) et sur une heure d'émission du premier message de liaison descendante (54) au niveau du satellite (110) et la deuxième information de distance est en outre basée sur une heure de réception du deuxième message de liaison montante (53) au niveau du satellite (110) et sur une heure d'émission du deuxième message de liaison descendante (52) au niveau du satellite (110).

5. Procédé selon une quelconque des revendications précédentes, comprenant en outre la détermination d'un ou plusieurs paramètres d'horloge d'une horloge de satellite du satellite (110) sur la base des positions connues de première et deuxième stations au sol respectives (120, 130) se rapportant à une ou plusieurs de la pluralité de périodes temporelles et sur la base de la première information de temporisation et de la deuxième information de temporisation durant une ou plusieurs de la pluralité de périodes temporelles.

6. Procédé selon la revendication 5 lorsqu'elle dépend de la revendication 2,
dans lequel la première information de retard et la deuxième information de retard dépendent d'une estimation d'un ou plusieurs paramètres d'horloge ;
dans lequel la première information de distance et la deuxième information de distance dépendent en outre de l'estimation d'un ou plusieurs paramètres d'horloge ; et
dans lequel la fonction d'erreur est minimisée par une adaptation récursive et conjointe de l'estimation d'un ou plusieurs paramètres d'orbite et l'estimation d'un ou plusieurs paramètres d'horloge.

7. Procédé selon une quelconque des revendications 2 à 6, dans lequel la fonction d'erreur est minimisée par minimisation aux moindres carrés ; ou
dans lequel la fonction d'erreur est minimisée par minimisation aux moindres carrés contrainte.

8. Procédé selon la revendication 5 ou toute revendication dépendant de la revendication 5, dans lequel un ou plusieurs paramètres d'horloge comprennent des paramètres d'un modèle d'horloge affine ; et/ou
dans lequel un ou plusieurs paramètres d'horloge comprennent un décalage d'horloge par rapport au temps absolu et, optionnellement, une dérive d'horloge par rapport au temps absolu.

9. Procédé selon une quelconque des revendications précédentes, dans lequel un ou plusieurs paramètres d'orbite comprennent au moins un parmi une excentricité de l'orbite, un demi-grand axe, une inclinaison, une ascension droite du nœud ascendant, un argument du périgée et une anomalie moyenne ; ou
dans lequel un ou plusieurs paramètres d'orbite comprennent au moins une parmi des composantes d'un vecteur de position du satellite (110) et des composantes d'un vecteur de vitesse du satellite (110).

10. Procédé selon une quelconque des revendications précédentes, dans lequel une séquence de messages échangés au cours de chaque période temporelle est donnée par : un premier message de liaison montante (51), un deuxième message de liaison descendante (52), un deuxième message de liaison montante (53), un premier message de liaison descendante (54).

11. Procédé selon une quelconque des revendications précédentes, dans lequel chacun des premier et deuxième messages de liaison montante (51, 53) et des premier et deuxième messages de liaison descendante (54, 52) inclut un identifiant d'un émetteur (122, 132) du message respectif ; et/ou
dans lequel le deuxième message de liaison montante (53) comprend une indication d'une heure de réception du deuxième message de liaison descendante (52) au niveau de la deuxième station au sol (130).

12. Procédé selon une quelconque des revendications précédentes, comprenant en outre, au niveau du satellite (110) :
au cours de chacune de la pluralité de périodes temporelles, la réception d'un troisième message de liaison montante en provenance de la première station au sol (120) (S510) ; et optionnellement,
la transmission d'un ou plusieurs troisièmes messages de liaison descendante destinés à être reçus par les première et deuxième stations au sol (120, 130) (S520).

13. Procédé selon la revendication 12, dans lequel le troisième message de liaison montante comprend une indication d'une heure de réception du premier message de liaison descendante (54) au niveau de la première station au sol (120) ; et/ou
dans lequel chacun des un ou plusieurs troisièmes messages de liaison descendante comprend des indications d'heures de réception des premier et deuxième messages de liaison montante (51, 53) au niveau du satellite (110), d'heures de transmission des premier et deuxième messages de liaison descendante (54, 52) au niveau du satellite (110), et d'un ou plusieurs paramètres d'orbite, et optionnellement le deuxième message de liaison montante (53) et le troisième message de liaison montante.

14. Procédé selon une quelconque des revendications précédentes, comprenant en outre, au niveau du satellite (110), l'échange de signalisation avec un deuxième satellite via une liaison inter-satellite, pour fournir au moins un parmi :
une télémétrie inter-satellite ;
un transfert de temps inter-satellite ;
des informations sur les paramètres d'orbite du premier satellite, du deuxième satellite et/ou d'un troisième satellite différent des premier et deuxième satellites ;
des informations sur les paramètres d'horloge du premier satellite, du deuxième satellite et/ou du troisième satellite ;
des informations de temporisation relatives au premier et/ou au deuxième satellite ;
des informations sur les positions des première et/ou deuxième stations au sol (120, 130) ;
des informations sur l'état ou le niveau de confiance de la détermination des un ou plusieurs paramètres d'orbite du premier satellite ;
des informations pour résoudre conjointement un problème d'estimation OD ou ODTS du premier satellite, du deuxième satellite et/ou du troisième satellite ; et/ou
des informations pour résoudre conjointement un problème d'estimation OD ou ODTS du premier satellite, du deuxième satellite et/ou du troisième satellite au moyen d'un algorithme de consensus distribué.

15. Procédé selon une quelconque des revendications précédentes, dans lequel les première et deuxième stations au sol (120, 130) sont des utilisateurs d'ancrage.

16. Satellite (110) comprenant :
une unité d'émission (122, 132) et de réception (123, 133) pour, au cours de chacune d'une pluralité de périodes temporelles, communiquer avec une paire respective de stations au sol (120, 130) comprenant une première station au sol (120) et une deuxième station au sol (130), afin d'échanger un premier message de liaison descendante (54) et un premier message de liaison montante (51) avec la première station au sol (120) et d'échanger un deuxième message de liaison descendante (52) et un deuxième message de liaison montante (53) avec la deuxième station au sol (130), **caractérisé en ce que** les premier et deuxième messages de liaison descendante (54, 52) et les premier et deuxième messages de liaison montante (51, 53) sont des messages horodatés ; et
une unité de traitement pour déterminer un ou plusieurs paramètres orbitaux indiquant une orbite du satellite (110) sur la base des positions connues des première et deuxième stations au sol respectives (120, 130) relatives à une ou plusieurs de la pluralité de périodes temporelles et sur la base de premières informations de temporisation relatives aux heures de réception et de transmission des premiers messages de liaison montante et descendante respectifs, ainsi qu'aux deuxièmes heures de réception et de transmission des deuxièmes messages de liaison montante et descendante respectifs au cours d'une ou plusieurs de la pluralité de périodes temporelles.
